# EUROPEAN PATENT APPLICATION

(11) **EP 2 219 188 A1**
(43) Date of publication of application: **18.08.2010**
(21) Application number: 08849434.9
(22) Date of filing: 28.10.2008
(51) Int. Cl.: G11B 7/24, C08F 290/06, C08G 59/17, C09D 4/02, G11B 7/254, G11B 7/257

(54) **ULTRAVIOLET-CURABLE COMPOSITION FOR OPTICAL DISK AND OPTICAL DISK**

(30) Priority: 16.11.2007 JP 2007297905
(71) Applicant: DIC Corporation, Tokyo 174-8520 (JP)
(72) Inventor: YAMAGUCHI, Junji, Kitaadachi-gun Saitama 362-8577 (JP); ITO, Daisuke, Kitaadachi-gun Saitama 362-8577 (JP); TANIMOTO, Youichi, Ichihara-shi Chiba 290-8585 (JP); TOKUDA, Hiroyuki, Ichihara-shi Chiba 290-8585 (JP); KAWASHIMA, Yasunari, Ichihara-shi Chiba 290-8585 (JP); TERADA, Hiroyuki, Ichihara-shi Chiba 290-8585 (JP)
(74) Representative: Albrecht, Thomas
(86) International application number: PCT/JP2008/069500
(87) International publication number: WO 2009/063743

(57) **Abstract**

With branched epoxy (meth)acrylate which comprises a phenyl skeleton serving as a stiff molecular skeleton, and which comprises in the molecular skeleton a number of branched structures capable of forming a coating structure at a high crosslinking density after ultraviolet curing, it becomes possible to design the coating hardness to be high even if the content of an acryloyl group is designed to be low to effect less crosslinking reaction induced by ultraviolet curing, and it becomes possible to relax distortions inside a cured film due to cure shrinkage which occurs at the time of ultraviolet curing. As a result, there can be realized an ultraviolet-curable composition for an optical disk which has a high elastic modulus and is less tilted at the time of curing even if the coating hardness is designed to be high.

## Description

### TECHNICAL FIELD

The present invention relates to an ultraviolet-curable composition for an optical disk containing an epoxy (meth)acrylate, and an optical disk using the ultraviolet-curable composition for an optical disk as a light transmission layer.

### BACKGROUND ART

A DVD (Digital Versatile Disc), serving as the mainstream of high-density recordable optical disks, has a structure in which two 0.6 mm-thick substrates are bonded together with an adhesive. So as to achieve a higher density, a DVD uses a laser of 650 nm having a shorter wavelength than that of a CD (Compact Disc), leading to a higher aperture ratio of the optical system.

However, further densification is required to record or play high resolution images and the like for HDTV (high definition television). Studies have been conducted into methods for higher-density recording and into an optical disk for such recording which will act as the post-DVD medium. There has been proposed a high-density recording method with a new optical disk structure which uses a blue laser having a shorter wavelength than that for a DVD, and uses an optical system having a higher aperture ratio.

This new optical disk is an optical disk comprising: a recording layer formed on a transparent or opaque substrate made of polycarbonate or such plastics; and a light transmission layer of about 100 µm subsequently laminated on the recording layer, with a structure which allows either one or both of recording light and reading light to enter through the light transmission layer. In terms of the productivity, the use of an ultraviolet-curable composition has been intensively studied for the light transmission layer of this optical disk.

As to an ultraviolet-curable composition for use in an optical disk, for example, there is disclosed a resin composition for an optical disk which uses a radical polymerizable epoxy acrylate (refer to Patent Document 1). The composition uses an epoxy acrylate, in particular, a high-specific gravity liquid oligomer such as a bisphenol A-type epoxy acrylate as an acrylate of low moisture permeability to thereby provide a resin film which causes low corrosion in a metal thin film. However, the composition containing a usual bisphenol A-type epoxy acrylate disclosed herein is prone to be tilted at the time of ultraviolet curing. Upon the formation of an optical disk having about a 100 µm-thick light transmission layer, a reflection layer is apt to be corroded at the time of a high-temperature high-humidity durability test. Therefore, errors are largely increased, which is problematic.

In order to minimize such tilt at the time of ultraviolet curing, for example, there is disclosed an ultraviolet-curable composition which uses a modified epoxy acrylate obtained through lactone-modification of an epoxy acrylate, as an ultraviolet-curable composition which uses an epoxy acrylate of a flexible structure (for example, refer to Patent Document 2). The composition has a flexible skeleton in the epoxy acrylate to be used. However, further reduction of tilt is needed when this composition is applied to a light transmission layer.

Furthermore, a branched epoxy acrylate has been disclosed as an ultraviolet-curable resin composition for a resist ink, and has been shown to be effective as an excellent material in dryness to touch at the time of film formation and in flexibility of the cured coating film (for example, refer to Patent Document 3).

An important role of the light transmission layer is to protect the metal thin film on which a signal pattern is recorded, and a hard light transmission layer having a high elastic modulus is required. Nonetheless, as described above, what is dominant so far is a coating design which uses a resin composition of a flexible structure so as to minimize tilt. Accordingly, the light transmission layer is insufficient in hardness and is not able to satisfy its role as a protective layer. In particular, a blue laser optical disk having a thick light transmission layer is tilted significantly due to cure shrinkage of the coating film which achieves a high elastic modulus. Therefore, both high elastic modulus and small shrinkage have been supposed to be hardly compatible.

Patent Document 1: Japanese Unexamined Patent Application, First Publication No. H11-302309
Patent Document 2 : Japanese Unexamined Patent Application, First Publication No. 2003-206449
Patent Document 3 : Japanese Unexamined Patent Application, First Publication No.2006-199942

### DISCLOSURE OF INVENTION

It is an object of the present invention to provide an ultraviolet-curable composition for an optical disk which is hardly tilted at the time of curing, capable of forming a cured coating having a high elastic modulus, and capable of forming an optical disk in which less error occurs. Another object is to provide an optical disk having a light transmission layer which is less tilted and is hardly deformed because of its high elastic modulus, and further to provide an optical disk in which less error occurs at the time of a high-temperature high-humidity durability test.

The inventors of the present invention have found out that a branched epoxy acrylate, which has been used as a flexible cured coating when applied to a resist ink, has a stiff bisphenol skeleton in the molecular skeleton and a plurality of radical polymerizable groups, and thus is capable of achieving a sufficient elastic modulus as a protective layer of an optical disk which is an object of the present invention, as well as capable of realizing a hard cured coating having a high elastic modulus, and forming a cured coating with less cure shrinkage. This has led to the completion of the present invention.

That is, the present invention provides an ultraviolet-curable composition for an optical disk for use in a light transmission layer of an optical disk which has at least a light reflection layer and a light transmission layer laminated on a substrate, for reading data by allowing a laser beam to enter from the side of said light transmission layer, wherein the composition includes a branched epoxy (meth)acrylate (E1) comprising:
at least one type of structural units represented by the formulas (1) and (2):

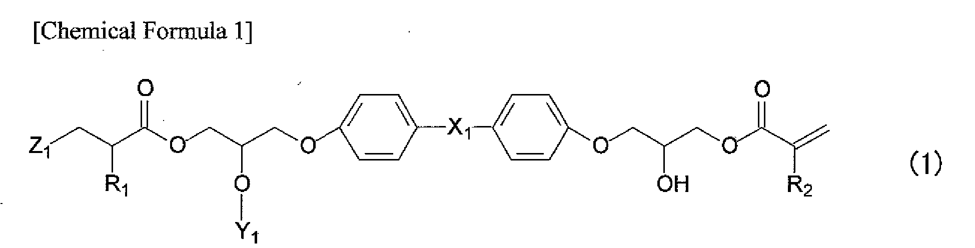

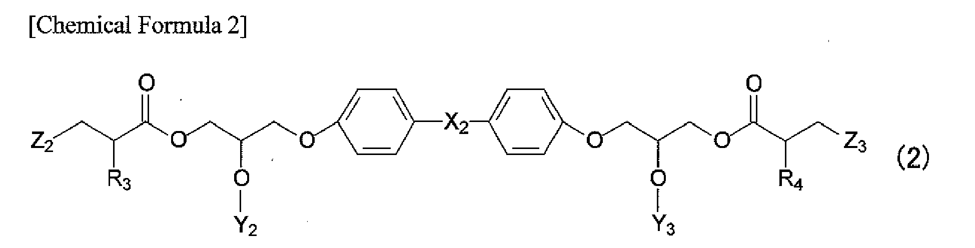

(in the formulas (1) and (2), X₁ and X₂ each represent, independently, a divalent group selected from SO₂, CH₂, CH(CH₃), or C(CH₃)₂, and R₁ to R₄ each represent, independently, a hydrogen atom or a methyl group), and
structural units represented by the formulas (3) and (4):

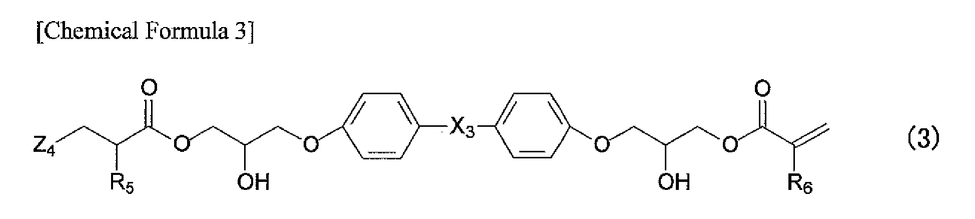

(in the formula (3), X₃ represents a divalent group selected from SO₂ , CH₂, CH(CH₃), or C(CH₃)₂, and R₅ and R₆ each represent, independently, a hydrogen atom or a methyl group)

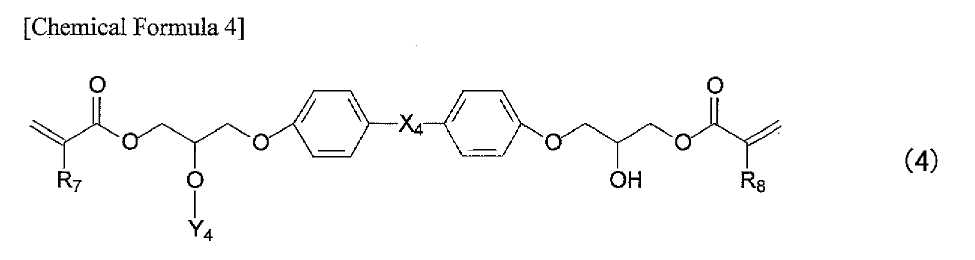

(in the formula (4), X₄ represents a divalent group selected from SO₂, CH₂, CH(CH₃), or C(CH₃)₂, and R₇ and R₈ each represent, independently, a hydrogen atom or a methyl group),
Y₁ in the structural unit represented by said formula (1) is bonded to any one of Z₁ to Z₃ of different structural units represented by the formulas (1) and (2), or Z₄ in the formula (3),
Y₂ and Y₃ in the structural unit represented by said formula (2) are respectively bonded to a hydrogen atom, any one of Z₁ to Z₃ of different structural units represented by the formulas (1) and (2), or Z₄ in the formula (3),
Z₁ to Z₃ in the structural units represented by said formulas (1) and (2) are respectively bonded to any one of Y₁ to Y₃ of different structural units represented by the formulas (1) and (2), or Y₄ in the formula (4), and
provides an optical disk comprising a cured film made of the ultraviolet-curable composition for an optical disk, as a light transmission layer.

The ultraviolet-curable composition for an optical disk of the present invention has a high elastic modulus for lessening deformation, as well as being capable of relaxing distortions inside a cured film occurring at the time of curing, suppressing tilt, and reducing errors. In addition, when used as a light transmission layer of an optical disk comprising a reflection layer made of silver or a silver alloy, the composition offers excellent durability and excellent light resistance. Accordingly, the optical disk of the present invention is most appropriate as a blue-laser optical disk having a thick light transmission layer.

In addition, since the ultraviolet-curable composition for an optical disk of the present invention has a high elastic modulus and causes less tilt, satisfactory abrasion resistance can be achieved when a hard coat layer is provided on the top.

### BEST MODE FOR CARRYING OUT THE INVENTION

### [Ultraviolet-curable composition]

The ultraviolet-curable composition for an optical disk of the present invention is an ultraviolet-curable composition for use in a light transmission layer that is required to have a high elastic modulus and little cure shrinkage, of an optical disk which has at least a light reflection layer and a light transmission layer laminated on a substrate, for reading data by allowing a laser beam to enter from the side of the light transmission layer.

The ultraviolet-curable composition for an optical disk of the present invention includes a branched epoxy (meth)acrylate (E1) comprising:
at least one type of structural units represented by the formulas (1) and (2):

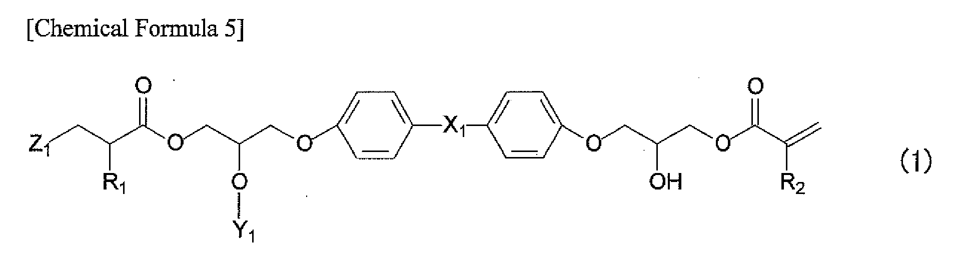

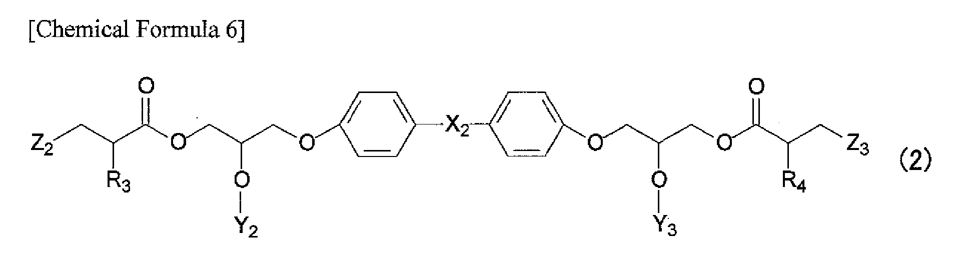

(in the formulas (1) and (2), X₁ and X₂ each represent, independently, a divalent group selected from SO₂, CH₂, CH(CH₃), or C(CH₃)₂, and R₁ to R₄ each represent, independently, a hydrogen atom or a methyl group), and
structural units represented by the formulas (3) and (4):

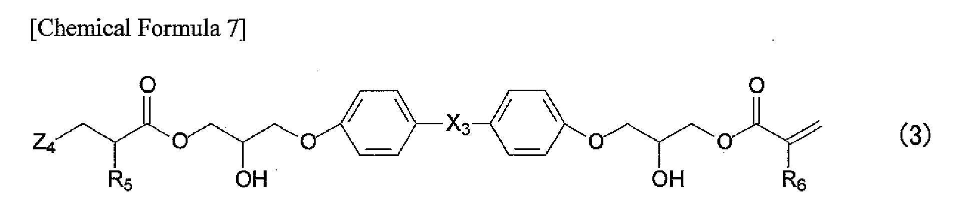

(in the formula (3), X₃ represents a divalent group selected from SO₂, CH₂, CH(CH₃), or C(CH₃)₂, and R₅ and R₆ each represent, independently, a hydrogen atom or a methyl group)

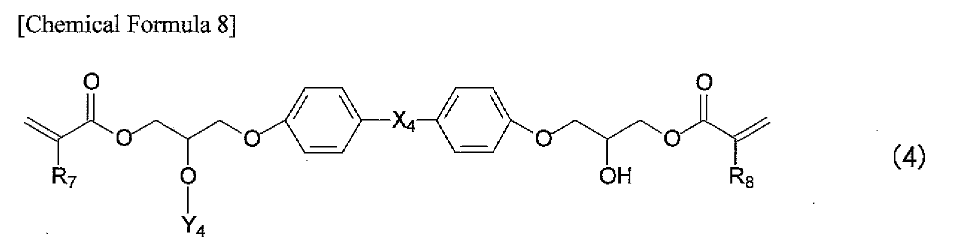

(in the formula (4), X₄ represents a divalent group selected from SO₂, CH₂, CH(CH₃), or C(CH₃)₂, and R₇ and R₈ each represent, independently, a hydrogen atom or a methyl group),
Y₁ in the structural unit represented by the formula (1) is bonded to any one of Z₁ to Z₃ of different structural units represented by the formulas (1) and (2), or Z₄ in the formula (3),
Y₂ and Y₃ in the structural unit represented by the formula (2) are respectively bonded to a hydrogen atom, any one of Z₁ to Z₃ of different structural units represented by the formulas (1) and (2), or Z₄ in the formula (3), and
Z₁ to Z₃ in the structural units represented by the formulas (1) and (2) are respectively bonded to any one of Y₁ to Y₃ of different structural units represented by the formulas (1) and (2), or Y₄ in the formula (4).

Of such branched epoxy (meth)acrylates (E1), preferred are those in which X₁ to X₄ represent a divalent group of C(CH₃)_{2,} and R₁ to R₈ represent a hydrogen atom, as they offer low cost production and facilitate the reaction control.

In addition, the branched epoxy (meth)acrylate (E1) may also be used in an epoxy (meth)acrylate mixture with an epoxy (meth)acrylate (E2) represented by the formula (5):

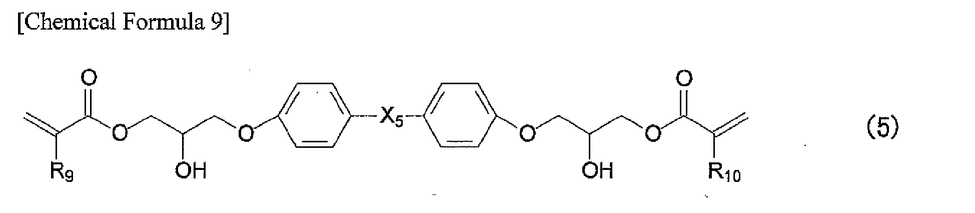

(in the formula (5), X₅ represents a divalent group selected from SO₂, CH₂, CH(CH₃), or C(CH₃)₂, and R₉ and R₁₀ each represent, independently, a hydrogen atom or a methyl group). Since the epoxy (meth)acrylate (E2) represented by the formula (5) is usually produced in the course of the production of the branched epoxy (meth)acrylate (E1), the use of the mixture of them is advantageous in terms of the production process.

In the present invention, the branched epoxy (meth)acrylate (E1) preferably comprises a branched epoxy (meth)acrylate represented by the formula (6):

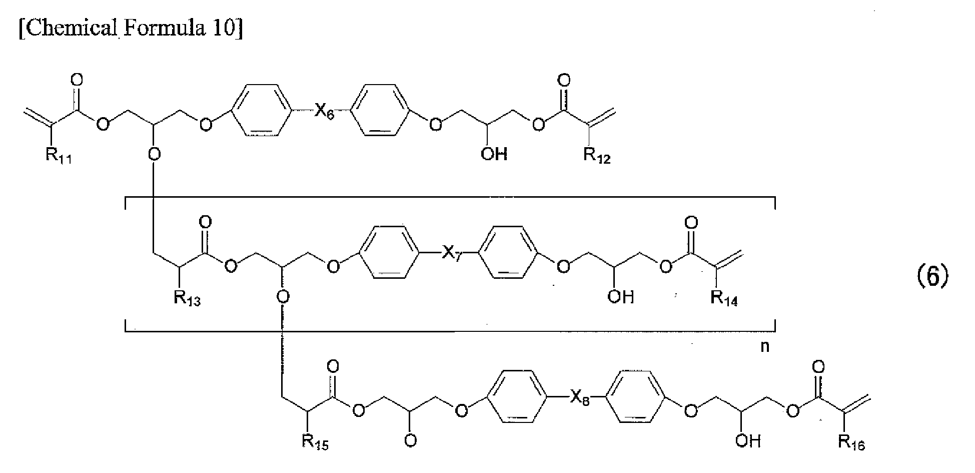

(in the formula (6), X₆ to X₈ each represent, independently, a divalent group selected from SO₂ CH₂, CH(CH₃), or C(CH₃)₂, R₁₁ to R₁₆ each represent, independently, a hydrogen atom or a methyl group, and n represents an integer from 0 to 20), as it facilitates the reaction control. Of these, particularly preferred are those in which X₆ to X₈ represent a divalent group of C(CH₃)₂, and R₁₁ to R₁₆ represent a hydrogen atom, as they offer low cost production and facilitate the reaction control.

The branched epoxy (meth)acrylate (E1) comprises a number of branched structures in the molecular skeleton and thus is capable of forming a coating structure having a high crosslinking density after ultraviolet curing, which is characteristic. In particular, by having a phenyl skeleton in the molecule, the branched epoxy (meth)acrylate (E1) has a stiff molecular skeleton originated from the phenyl skeleton. Therefore it becomes possible to design the coating hardness to be high even if the content of an acryloyl group is designed to be low to cause less crosslinking reaction induced by ultraviolet curing. That is, it becomes possible to relax distortions inside a cured film due to cure shrinkage which occurs at the time of ultraviolet curing. As a result, there can be realized a coating for an optical disk which has a high elastic modulus and causes less tilt at the time of curing even if the coating hardness is designed to be high. The ultraviolet-curable composition of the present invention is most appropriate for use particularly in an optical disk which needs a thick light transmission layer for execution of signal recording and reading with a blue laser, among various types of optical disks.

The branched epoxy (meth)acrylate (E1) can be obtained by: reacting, in a mixture containing;
(1-1) a diacrylate (A2) of an aromatic bifunctional epoxy resin,
(1-2) (1-2-1) a monoacrylate (A1) of an aromatic bifunctional epoxy resin and/or (1-2-2) an aromatic bifunctional epoxy resin (B) other than the (A1) and (A2), and
(1-3) a phosphorus-based catalyst (C),
between a hydroxyl group and an acryloyl group within the diacrylate (A2) of an aromatic bifunctional epoxy resin, or between a hydroxyl group and an acryloyl group within the diacrylate (A2) of an aromatic bifunctional epoxy resin and the monoacrylate (A1) of an aromatic bifunctional epoxy resin,
so as to thereby obtain a reaction mixture containing a branched epoxy (meth)acrylate intermediate (e1) having a hydroxyl group, an acryloyl group, and an epoxy group;
and thereafter, mixing the reaction mixture and an unsaturated monocarboxylic acid to cause a reaction between the epoxy group within the branched epoxy (meth)acrylate intermediate (e1) in the reaction mixture and the carboxyl group within the unsaturated monocarboxylic acid.

The branched epoxy (meth)acrylate intermediate (e1) having a hydroxyl group, an acryloyl group, and an epoxy group in the reaction mixture is a branched epoxy (meth)acrylate obtained by reacting between a hydroxyl group and an acryloyl group within the diacrylate (A2) of an aromatic bifunctional epoxy resin, or between a hydroxyl group and an acryloyl group within the diacrylate (A2) of an aromatic bifunctional epoxy resin and the monoacrylate (A1) of an aromatic bifunctional epoxy resin. One or more types of resin components selected from the group consisting of the aromatic bifunctional diacrylate (A2), the monoacrylate (A1) of an aromatic bifunctional epoxy resin, and the aromatic epoxy compound (B) are unreacted resin components after the synthetic reaction of a branched epoxy (meth)acrylate (E1) in the mixture (reaction system) containing: the diacrylate (A2) of an aromatic bifunctional epoxy resin; the monoacrylate (A1) of an aromatic bifunctional epoxy resin and/or the aromatic bifunctional epoxy resin (B); and the phosphorus-based catalyst (C).

The diacrylate (A2) of an aromatic bifunctional epoxy resin is a compound obtained by acryloylation of two epoxy groups within an aromatic bifunctional epoxy resin (b) using an acrylic acid (a). Examples of the aromatic bifunctional epoxy resin (b) used herein include: biphenol-type epoxy resins such as a tetramethylbiphenol-type epoxy resin; bisphenol-type epoxy resins such as a bisphenol A-type epoxy resin, a bisphenol F-type epoxy resin, and a bisphenol S-type epoxy resin; dicyclopentadiene-modified aromatic bifunctional epoxy resins; dihydroxynaphthalene-type epoxy resins obtained by epoxidation of dihydroxynaphthalenes; glycidyl ester-type resins of aromatic bivalent carboxylic acids; bifunctional epoxy resins derived from xylenol; naphthalenearalkyl epoxy resins; epoxy resins obtained by modifying the above-mentioned aromatic bifunctional epoxy resins with dicyclopentadiene; and ester-modified epoxy resins obtained by modifying the above-mentioned aromatic bifunctional epoxy resins with a dicarboxylic acid or the like.

The aromatic bifunctional epoxy resin (b) used in the preparation of the diacrylate (A2) of an aromatic bifunctional epoxy resin may be used as either a single resin, or a combination of two or more different resins.

The monoacrylate (A1) of an aromatic bifunctional epoxy resin and/or the aromatic epoxy compound (B) refers to for example, a single use of the monoacrylate (A1) of an aromatic bifunctional epoxy resin obtained by acrylation of one of the two epoxy groups within the aromatic bifunctional epoxy resin (b) using an acrylic acid, a single use of the aromatic bifunctional epoxy resin (b), or a use of a mixture of both. The aromatic bifunctional epoxy resin (b) used herein may be either the same as, or different from, the resin used in the preparation of the diacrylate (A2) of an aromatic bifunctional epoxy resin. In addition, the aromatic bifunctional epoxy resin (b) used in the preparation of the monoacrylate (A1) of an aromatic bifunctional epoxy resin may be used as either a single resin, or a combination of two or more different resins.

In order to obtain the reaction mixture, for example, reaction may be conducted within a mixture containing separately prepared samples of the diacrylate (A2) of an aromatic bifunctional epoxy resin, the monoacrylate (A1) of an aromatic bifunctional epoxy resin and/or the aromatic bifunctional epoxy resin (B), and the phosphorus-based catalyst (C), if necessary in the presence of an organic solvent or a reactive diluent, between a hydroxyl group and an acryloyl group within the diacrylate (A2) of an aromatic bifunctional epoxy resin, or between a hydroxyl group and an acryloyl group within the diacrylate (A2) of an aromatic bifunctional epoxy resin and the monoacrylate (A1) of an aromatic bifunctional epoxy resin. The temperature for the reaction is usually 100 to 170°C, and preferably 100 to 150°C. The reaction time is usually 1 to 20 hours, and preferably 2 to 15 hours. In this reaction, the separately prepared diacrylate (A2) of an aromatic bifunctional epoxy resin may be a mixture which contains the monoacrylate (A1) of an aromatic bifunctional epoxy resin and/or the aromatic bifunctional epoxy resin (B). If required, an acrylate of a trifunctional or higher aromatic polyfunctional epoxy resin may also be included, provided gelling does not occur. Furthermore, a monoacrylate of an aromatic monoepoxy compound and/or an aromatic monoepoxy compound may also be included.

As described above, in order to obtain the reaction mixture, there is used a mixture containing the diacrylate (A2) of an aromatic bifunctional epoxy resin, the monoacrylate (A1) of an aromatic bifunctional epoxy resin and/or the aromatic bifunctional epoxy resin (B), and the phosphorus-based catalyst (C), and it is preferable to use a reaction system containing the diacrylate (A2) of an aromatic bifunctional epoxy resin, and the monoacrylate (A1) of an aromatic bifunctional epoxy resin and/or the aromatic bifunctional epoxy resin (B), obtained by reacting an aromatic bifunctional epoxy resin (b) with an acrylic acid (a) under conditions where the epoxy groups within the aromatic bifunctional epoxy resin (b) exist in an excess relative to the carboxyl groups within the acrylic acid (a) (hereafter, this step may be abbreviated as "step 1"), as the mixture of (A2) and (A1) and/or (B), since the subsequent production of the reaction mixture can be conducted in a consecutive manner.

In particular, a reaction system containing a diacrylate (A2) of an aromatic bifunctional epoxy resin and a monoacrylate (A1) of an aromatic bifunctional epoxy resin (which may also contain an unreacted aromatic bifunctional epoxy resin (B)), that is, either a reaction system comprising the above-mentioned (A2) and (A1), or a reaction system comprising the above-mentioned (A2), (A1), and (B), is preferred since the reaction can be readily conducted.

Furthermore, either a hydroxyl group and an acryloyl group within the diacrylate (A2) of an aromatic bifunctional epoxy resin in the reaction system, or a hydroxyl group and an acryloyl group within the diacrylate (A2) of an aromatic bifunctional epoxy resin and the monoacrylate (A1) of an aromatic bifunctional epoxy resin in the reaction system, are reacted in the presence of a phosphorus-based catalyst (C). This reaction yields a reaction mixture which contains a branched epoxy (meth)acrylate intermediate (e1) having a hydroxyl group, an acryloyl group, and an epoxy group, obtained by polymerization of the diacrylate (A2) of an aromatic bifunctional epoxy resin, or the diacrylate (A2) of an aromatic bifunctional epoxy resin and the monoacrylate (A1) of an aromatic bifunctional epoxy resin, with at least one unreacted resin components selected from the group consisting of the diacrylate (A2) of an aromatic bifunctional epoxy resin, the monoacrylate (A1) of an aromatic bifunctional epoxy resin, and the aromatic bifunctional epoxy resin (B).

The aromatic bifunctional epoxy resin (B) used in the present invention is an epoxy resin other than the above-mentioned (A1) and (A2). In the step 1, the aromatic bifunctional epoxy resin (b) is reacted with an acrylic acid (a) under conditions where the epoxy groups within the aromatic bifunctional epoxy resin (b) exist in an excess relative to the carboxyl groups within the acrylic acid (a), and consequently some of the aromatic bifunctional epoxy resin (b) remains without reacting with the acrylic acid (a). This residual aromatic bifunctional epoxy resin (b) is different from the diacrylate (A2) of an aromatic bifunctional epoxy resin or the monoacrylate (A1) of an aromatic bifunctional epoxy resin, which represent reaction products of the aromatic bifunctional epoxy resin (b) and the acrylic acid (a). Accordingly, this residual aromatic bifunctional epoxy resin (b) serves as the aromatic bifunctional epoxy resin (B) other than (A1) and (A2).

Examples of the phosphorus-based catalyst (C) used in the present invention include phosphines and phosphonium salts. Of these, phosphines are most preferable.

Examples of these phosphines include trialkylphosphines, triphenylphosphine, and trialkylphenylphosphines. Of these, triphenylphosphine is particularly preferred as it facilitates the reaction control.

In terms of the quantity of the phosphorus-based catalyst (C), the reaction in the mixture between a hydroxyl group and an acryloyl group within the diacrylate (A2) of an aromatic bifunctional epoxy resin and the monoacrylate (A1) of an aromatic bifunctional epoxy resin proceeds more readily as the quantity of catalyst is increased. However, considering that larger catalyst quantities increase the likelihood of gelling and cause deterioration in the stability of the composition, the quantity of the catalyst is preferably within a range of 10 to 30,000 ppm relative to the combined weight of the aromatic bifunctional epoxy resin (b) and the acrylic acid (a).

As the aromatic bifunctional epoxy resin (b) and the aromatic bifunctional epoxy resin (B), preferred are resins of which the epoxy equivalent weight is 135 to 2,000 g/equivalent, and particularly 135 to 500 g/equivalent, as they yield resin compositions of excellent curability. Moreover, because they yield resin compositions which exhibit excellent mechanical strength of the cured product, preferred are biphenol-type epoxy resins such as a tetramethylbiphenol-type epoxy resins, bisphenol-type epoxy resins such as a bisphenol A-type epoxy resin, a bisphenol F-type epoxy resin, and a bisphenol S-type epoxy resin, and dihydroxynaphthalene-type epoxy resins obtained by epoxidation of dihydroxynaphthalenes, more preferred are a bisphenol A-type epoxy resin or a 1,6-dihydroxynaphthalene-type epoxy resin, and most preferred is a bisphenol A-type epoxy resin.

There are no specific limitations in the range of excess of the epoxy groups within the aromatic bifunctional epoxy resin (b) relative to the carboxyl groups within the acrylic acid (a), although for a smooth progression in the reaction between a hydroxyl group and an acryloyl group within the diacrylate (A2) of an aromatic bifunctional epoxy resin, or the reaction between a hydroxyl group and an acryloyl group within the diacrylate (A2) of an aromatic bifunctional epoxy resin and the monoacrylate (A1) of an aromatic bifunctional epoxy resin, the equivalent ratio of the epoxy groups within the aromatic bifunctional epoxy resin (b) to the carboxyl groups within the acrylic acid (a) [namely, (epoxy group equivalent weight)/(carboxyl group equivalent weight)] is preferably within a range of 1.1 to 5.5. Moreover, for facilitating the molecular weight adjustment of the obtained branched polyether resin, this equivalent ratio [(epoxy group equivalent weight)/(carboxyl group equivalent weight)] is more preferably within a range of 1.25 to 3.0.

In the step of reacting the epoxy groups in the above-mentioned reaction mixture with the carboxyl groups in the unsaturated monocarboxylic acid, the majority or all of the epoxy groups are consumed by the reaction between the epoxy groups in the above-mentioned reaction mixture and the carboxyl groups in the unsaturated monocarboxylic acid, thereby yielding a branched epoxy (meth)acrylate (E1) having an unsaturated monocarboxylate ester structure including a hydroxyl group and an acryloyl group. Therefore, the reaction system can provide a branched epoxy (meth)acrylate composition (II) including this branched epoxy (meth)acrylate (E1) and a di(unsaturated monocarboxylate) ester of an aromatic bifunctional epoxy resin.

Examples of the unsaturated monocarboxylic acid used herein include compounds including one polymerizable unsaturated group and one carboxyl group. Specifically, usually used are acrylic acid, methacrylic acid, crotonic acid, cinnamic acid, monomethyl maleate, monoethyl maleate, monopropyl maleate, monobutyl maleate, mono(2-ethylhexyl) maleate, and sorbic acid, although other compounds may also be used _ such as: unsaturated half ester compounds obtained by reaction between a dicarboxylic acid anhydride and a (meth)acrylate compound which includes a hydroxyl group such as a hydroxyethyl (meth)acrylate, a hydroxypropyl (meth)acrylate, a hydroxybutyl (meth)acrylate, a hydroxycyclohexyl (meth)acrylate, a pentaerythritol tri(meth)acrylate, and a dipentaerythritol penta(meth)acrylate; lactone-modified unsaturated monocarboxylic acids obtained by reaction between ε-caprolactone and a compound which includes a polymerizable unsaturated group and one carboxyl group; and dimmers such as an acrylic acid dimmer. Of these, acrylic acid and/or methacrylic acid are preferred.

The reaction is preferably conducted so that the equivalent ratio of the epoxy groups within the reaction mixture to the carboxyl groups within the unsaturated monocarboxylic acid (epoxy groups/carboxyl groups) is within a range of 0.9/1 to 1/0.9, in terms of obtaining a branched epoxy (meth)acrylate (E1) having excellent long-term stability and excellent curability. Furthermore, acrylic acid and/or methacrylic acid are preferred as the unsaturated monocarboxylic acid as they offer excellent ultraviolet curability.

The temperature for the reaction between the epoxy groups within the reaction mixture and the unsaturated monocarboxylic acid is usually 80 to 160°C, although it is preferably 100 to 140°C as excellent stability can be given at the time of synthesis. Moreover, the reaction time is usually 1 to 20 hours, and preferably 2 to 15 hours. At this time, a basic catalyst may also be added as a reaction catalyst.

Examples of the basic catalyst include: tertiary amines such as triethylamine, tributylamine, trisdimethylaminomethylphenol, benzyldimethylamine, and diethanolamine; quaternary ammonium hydroxides such as tetramethylammonium hydroxide and tetrabutylammonium hydroxide; imidazoles such as 2-methylimidazole and 2-ethyl-4-methylimidazole; nitrogen compounds such as diethylamine hydrochloride and diazabicycloundecene; trialkylphosphines such as triphenylphosphine; tetraalkylphosphonium hydroxides such as tetra-n-butylphosphonium hydroxide; metal salts such as chromium naphthenate; quaternary ammonium salts such as trimethylbenzylammonium chloride and tetramethylammonium chloride; halogen-based catalysts such as phosphonium salts including tetra-n-butylphosphonium bromide and ethyltriphenylphosphonium bromide; and inorganic catalysts such as sodium hydroxide and lithium hydroxide.

Of these basic catalysts; preferred are halogen-free catalysts, and particularly preferred are nitrogen compounds such as tertiary amines and quaternary ammonium salts; and phosphorus-based catalysts such as phosphines and phosphonium salts. Of these, phosphorus-based catalysts such as phosphines and phosphonium salts are even more preferred as they can be used as an essential catalyst for the first step, and phosphines are most preferred.

Examples of these phosphines include trialkylphosphines, triphenylphosphine, and trialkylphenylphosphines. Of these, triphenylphosphine is particularly preferred as it facilitates the reaction control.

In terms of the quantity of the basic catalyst, the reaction proceeds more readily as the quantity of the catalyst is increased. However, considering that larger catalyst quantities increase the likelihood of gelling and cause a deterioration in the stability of the composition, the quantity of the catalyst is preferably within a range of 10 to 30,000 ppm relative to the combined weight of the aromatic bifunctional epoxy resin (b) and the acrylic acid (a). Different phosphorus-based catalysts may also be added, and the catalysts may be added in the middle of the reaction.

After the synthesis of the branched epoxy (meth)acrylate of the present invention, the resultant product is usually obtained in a form of a mixture containing an epoxy (meth)acrylate represented by the formula (5) and a branched epoxy (meth)acrylate (E1) in which the number of repetitions "n" of the structural unit represented by the formula (1) or (2) is within a range of 1 to 100. For example, the distribution of such compounds can be observed with a variation of the n value by an analysis using gel permeation chromatography or the like. Accordingly, it is easy and simple to use the concerned mixture for the preparation of the ultraviolet-curable composition of the present invention. When the concerned mixture is used, more preferred is a mixture containing a branched epoxy (meth)acrylate (n = 1 to 100) at 30% by mass or more, and more preferably at 35% by mass or more.

In the present invention, the weight average molecular weight (Mw) of the branched epoxy (meth)acrylate (E1) in the mixture containing the branched epoxy (meth)acrylate (E1) and the epoxy (meth)acrylate represented by the formula (5), confirmed from the measurement results of gel permeation chromatography (GPC), is preferably 1000 to 10000, more preferably 1500 to 8000, and even more preferably 2000 to 6000. By setting the molecular weight of the branched epoxy (meth)acrylate (E1) within such a range, unnecessary increase in the viscosity can be avoided, and the content of the branched epoxy (meth)acrylate (E1), serving as an essential component in the ultraviolet-curable composition of the present invention, can be increased. In addition, the ratio of the branched epoxy (meth)acrylate (E1) to the epoxy (meth)acrylate (E2) in the mixture is preferably within a range of branched epoxy (meth)acrylate (E1)/epoxy (meth)acrylate (E2) =10/1 to 1/2, more preferably 5/1 to 1/1, and even more preferably 3/1 to 3/2 in terms of the area ratio of a chromatogram measured by the above-mentioned GPC.

The GPC-based weight average molecular weight can be determined by conducting a measurement, for example, using HLC-8020 manufactured by TOSO Co. Ltd., four columns of Super HZM-M, and a THF solvent, at a flow rate of 1.0 ml/min, a column temperature of 40°C, and a detector temperature of 30°C, and by calculating the molecular weight based on the standard polystyrene equivalent.

The ultraviolet-curable composition of the present invention preferably includes the branched epoxy (meth)acrylate (E1) at 10% to 80% by mass, and more preferably at 20% to 70% by mass, relative to the total amount of radical polymerizable compounds included in the ultraviolet-curable composition. Moreover, in the ultraviolet-curable composition may be used known radical polymerizable monomers, oligomers, photopolymerization initiators, heat-polymerization initiators and the like. Furthermore, in the ultraviolet-curable composition of the present invention may also be optionally used known additives and auxiliary agents.

As radical polymerizable compounds other than the branched epoxy (meth)acrylate (E1) of the present invention, there can be used monofunctional (meth)acrylates, polyfunctional (meth)acrylates, other oligomers having (meth)acryloyl groups, or the like, for use in an optical disk, in appropriate combinations. As radical polymerizable compounds other than the branched epoxy (meth)acrylate (E1), preferably used are (meth)acrylates having excellent dilutional property, (meth)acrylates capable of yielding a composition whose surface tension is readily adjustable within a suitable range, (meth)acrylates having excellent curing property, and (meth)acrylates having excellent adhesiveness to a substrate.

Examples of the monofunctional (meth)acrylates include aliphatic (meth)acrylates such as ethyl (meth)acrylate, butyl (meth)acrylate, 2-ethylhexyl (meth)acrylate, nonyl (meth)acrylate, tridecyl (meth)acrylate, hexadecyl (meth)acrylate, octadecyl (meth)acrylate, isoamyl (meth)acrylate, isodecyl (meth)acrylate, isostearyl (meth)acrylate, ethoxyethoxyethyl (meth)acrylate, 2-hydroxyethyl (meth)acrylate, 4-hydroxybutyl (meth)acrylate, 3-chloro-2-hydroxypropyl (meth)acrylate, methoxyethyl (meth)acrylate, butoxyethyl (meth)acrylate, and benzyl (meth)acrylate; aromatic (meth)acrylates such as nonylphenoxyethyl (meth)acrylate, 2-hydroxy-3-phenoxypropyl (meth)acrylate, nonylphenoxyethyltetrahydrofurfuryl (meth)acrylate, and phenoxyethyl (meth)acrylate; alicyclic (meth)acrylates such as tetrahydrofurfuryl (meth)acrylate, glycidyl (meth)acrylate, dicyclopentenyl (meth)acrylate, dicyclopentanyl (meth)acrylate, dicyclopentenyloxyethyl (meth)acrylate, tetracyclododecanyl (meth)acrylate, and cyclohexyl (meth)acrylate; caprolactone-modified tetrahydrofurfuryl (meth)acrylate; acryloyl morpholine; isobornyl (meth)acrylate; norbornyl (meth)acrylate; and 2-(meth)acryloyloxymethyl-2-methylbicycloheptaneadamantyl (meth)acrylate.

Of these monofunctional (meth)acrylates, preferred are tetrahydrofurfuryl (meth)acrylate, phenoxyethyl (meth)acrylate, dicyclopentanyl (meth)acrylate, and caplolactone-modified tetrahydrofurfuryl (meth)acrylate.

Particularly preferred are phenoxyethyl acrylate and tetrahydrofurfuryl acrylate whose viscosities are low and whose dilutional properties are excellent. Phenoxyethyl acrylate provides sufficient flexibility, and tetrahydrofurfuryl acrylate provides improved adhesiveness to a polycarbonate substrate.

The content of the monofunctional (meth)acrylate is preferably 5 to 40% by mass, and more preferably 10 to 30% by mass, relative to the total amount of radical polymerizable compounds included in the ultraviolet-curable composition of the present invention.

The bifunctional (meth)acrylate may be used either alone or in combinations.
Examples of the bifunctional (meth)acrylate include 1,4-butanediol di(meth)acrylate, 3-methyl-1,5-pentanediol di(meth)acrylate, 1,6-hexanediol di(meth)acrylate, neopentyl glycol di(meth)acrylate, 2-methyl-1,8-octanediol di(meth)acrylate, 2-butyl-2-ethyl-1,3-propanediol di(meth)acrylate, ethylene glycol di(meth)acrylate, trimethylolpropane di(meth)acrylate, pentaerythritol di(meth)acrylate, polypropylene glycol di(meth)acrylate, a di(meth)acrylate of a diol obtained by adding 4 moles or more of ethylene oxide or propylene oxide to 1 mole of neopentyl glycol, ethylene oxide-modified phosphate (meth)acrylate, ethylene oxide-modified alkylated phosphate di(meth)acrylate, diethylene glycol di(meth)acrylate, dipropylene glycol di(meth)acrylate, tripropylene glycol di(meth)acrylate, polyether (meth)acrylate, diethylaminoethyl (meth)acrylate, an alicyclic bifunctional (meth)acrylate as a (meth)acrylate having an alicyclic structure, such as norbonane dimethanol di(meth)acrylate, norbonane diethanol di(meth)acrylate, a di(meth)acrylate of a diol obtained by adding 2 moles of ethylene oxide or propylene oxide to norbornane dimethanol, tricyclodecane dimethanol di(meth)acrylate, tricyclodecane diethanol di(meth)acrylate, a di(meth)acrylate of a diol obtained by adding 2 moles of ethylene oxide or propylene oxide to tricyclodecane dimethanol, pentacyclopentadecane dimethanol di(meth)acrylate, pentacyclopentadecane diethanol di(meth)acrylate, a di(meth)acrylate of a diol obtained by adding 2 moles of ethylene oxide or propylene oxide to pentacyclopentadecane dimethanol, a di(meth)acrylate of a diol obtained by adding 2 moles of ethylene oxide or propylene oxide to pentacyclopentadecane diethanol, dimethylol dicyclopentane di(meth)acrylate, hydroxypivalate neopentyl glycol di(meth)acrylate, caprolactone-modified hydroxypivalate neopentyl glycol di(meth)acrylate, ethylene oxide-modified bisphenol A di(meth)acrylate, and propylene oxide-modified bisphenol A di(meth)acrylate.

Of these bifunctional (meth)acrylates, preferred are 1,4-butanediol di(meth)acrylate, 1,6-hexanediol di(meth)acrylate, neopentyl glycol di(meth)acrylate, dipropylene glycol di(meth)acrylate, tripropylene glycol di(meth)acrylate, tricyclodecane dimethanol di(meth)acrylate, hydroxypivalate neopentyl glycol di(meth)acrylate, caprolactone-modified hydroxypivalate neopentyl glycol di(meth)acrylate, ethylene oxide-modified bisphenol A di(meth)acrylate, and propylene oxide-modified bisphenol A di(meth)acrylate.

Particularly preferred are hydroxypivalate neopentyl glycol diacrylate, dipropylene glycol diacrylate, tripropylene glycol diacrylate, and ethylene oxide-modified bisphenol A diacrylate as they have excellent durability. Moreover, neopentyl glycol and 1,6- hexanediol diacrylate are preferred as they improve the adhesiveness to a polycarbonate substrate.

The content of the bifunctional (meth)acrylate is preferably 5 to 70% by mass, and more preferably 10 to 50% by mass, relative to the total amount of radical polymerizable compounds included in the ultraviolet-curable composition of the present invention.

Furthermore, a trifunctional or higher (meth)acrylate can be used if it is desired to adjust the elastic modulus after curing to a higher level. Examples of such (meth)acrylates used herein include bis(2-acryloyloxyethyl)hydroxyethyl isocyanurate, bis(2-acryloyloxypropyl)hydroxypropyl isocyanurate, bis(2-acryloyloxybutyl)hydroxybutyl isocyanurate, bis(2-methacryloyloxyethyl)hydroxyethyl isocyanurate, bis(2-methacryloyloxypropyl)hydroxypropyl isocyanurate, bis(2-methacryloyloxybutyl)hydroxybutyl isocyanurate, tris(2-acryloyloxyethyl)isocyanurate, tris(2-acryloyloxypropyl)isocyanurate, tris(2-acryloyloxybutyl)isocyanurate, tris(2-methacryloyloxyethyl)isocyanurate, tris(2-methacryloyloxypropyl)isocyanurate, tris(2-methacryloyloxybutyl)isocyanurate, trimethylolpropane tri(meth)acrylate, ditrimethylolpropane tetra(meth)acrylate, pentaerythritol tri(meth)acrylate, pentaerythritol tetra(meth)acrylate, dipentaerythritol penta(meth)acrylate, dipentaerythritol hexa(meth)acrylate, a di- or tri- (meth)acrylate of a triol obtained by adding 3 moles or more of ethylene oxide or propylene oxide to 1 mole of trimethylolpropane, and a polyfunctional (meth)acrylate such as a poly(meth)acrylate of dipentaerythritol.

Of these, preferred is a triacrylate of a triol obtained by adding 3 moles or more of ethylene oxide to 1 mole of trimethylolpropane, as it offers rapid curability and low cure shrinkage rate.

The content of the trifunctional or higher (meth)acrylate is preferably 30% by mass or less, and more preferably 20% by mass or less, relative to the total amount of radical polymerizable compounds included in the ultraviolet-curable composition of the present invention.

In addition, a radical polymerizable compound such as N-vinylpyrrolidone, N-vinylcaprolactam, or a vinyl ether monomer can also be used if necessary.

In the present invention, regarding other oligomers that can be used in combination with the branched epoxy (meth)acrylate (E1), there can be exemplified polyurethane (meth)acrylates such as a urethane (meth)acrylate of a polyether skeleton, a urethane (meth)acrylate of a polyester skeleton, and a urethane (meth)acrylate of a polycarbonate skeleton; a polyester (meth)acrylate obtained by esterifying a polyol of a polyester skeleton with a (meth)acrylic acid; a polyether (meth)acrylate obtained by esterifying a polyol of a polyether skeleton with a (meth)acrylic acid; and an epoxy (meth)acrylate obtained by reacting glycidyl groups of an epoxy resin with an acrylic acid. One, or two or more types of these oligomers can be used.

The surface tension of the ultraviolet-curable composition of the present invention is preferably 36 mN/m or lower, and particularly preferably 20 to 36 mN/m. By setting the surface tension within such a range, the wettability for a subject to be adhered is improved and thereby the cured coating can be readily given an even thickness.

In the present invention, regarding other epoxy (meth)acrylates for use in combination with the branched epoxy (meth)acrylate (E1), preferably used are epoxy (meth)acrylates having a weight average molecular weight (Mw) of 500 to 20000, and more preferably 800 to 15000, measured by gel permeation chromatography (GPC). By setting the structure and the molecular weight of the epoxy (meth)acrylate within such a range, the durability and the light resistance of the optical disk using the ultraviolet-curable composition of the present invention can be further improved. In addition, the weight average molecular weight (Mw) of other urethane (meth)acrylates for use in combination with the branched epoxy (meth)acrylate (E1) in the present invention is preferably 1000 to 20000, and more preferably 1500 to 10000, measured by gel permeation chromatography (GPC). By so doing, the durability and the light resistance of the optical disk using the ultraviolet-curable composition of the present invention can be further improved.

In the ultraviolet-curable composition of the present invention, the content of the oligomer is preferably 5 to 30% by mass, and particularly preferably 5 to 20% by mass, relative to the radical polymerizable compounds included in the ultraviolet-curable composition. By setting the content of the oligomer within such a range, appropriate flexibility can be given to the cured film.

As to the photopolymerization initiator, any known photopolymerization initiator for general use can be employed, although molecular cleavage-type or hydrogen abstraction-type photopolymerization initiators are preferred for use in the present invention. Examples of the photopolymerization initiator for use in the present invention include molecular cleavage-type photopolymerization initiators such as benzoin isobutyl ether, 2,4-diethyl thioxanthone, 2-isopropyl thioxanthone, benzyl, 1-hydroxycyclohexyl phenyl ketone, benzoin ethyl ether, benzyl dimethyl ketal, 2-hydroxy-2-methyl-1-phenylpropane-1-one, 1-(4-isopropylphenyl)-2-hydroxy-2-methylpropane-1-one, and 2-methyl-1-(4-methylthiophenyl)-2-morpholino-propane-1-one; and hydrogen abstraction-type photopolymerization initiators such as benzophenone, 4-phenyl benzophenone, isophthalphenone, and 4-benzoyl-4'-methyl-diphenyl sulfide.

Moreover, as to the sensitizing agent, there can be used, for example, trimethylamine, methyldimethanolamine, triethanolamine, p-dimethylaminoacetophenone, ethyl p-dimethylaminobenzoate, isoamyl p-dimethylaminobenzoate, N,N-dimethylbenzylamine, and 4,4'-bis(diethylamino)benzophenone. Furthermore, amines that do not cause an addition reaction with the above-mentioned photopolymerizable compounds can also be used in combination. Of these compounds, needless to say, preferably selected and used are compounds that have excellent solubility for ultraviolet-curable compounds and that do not impair ultraviolet transmission properties. In addition, the ultraviolet-curable resin composition may also contain, if necessary, additives such as a surfactant, a leveling agent, a heat-polymerization inhibitor, an antioxidant such as a hindered phenol or a phosphite, a light stabilizer such as a hindered amine, and a corrosion inhibitor such as benzotriazoles.

Furthermore, if necessary, an auxiliary agent such as a silane coupling agent or titanium coupling agent which improves the adherence property or the adhesiveness, or an auxiliary agent that improves the wettability or the surface smoothness can be added in a known optional amount.

To the ultraviolet-curable composition of the present invention, a compound represented by the formula (7) is preferably added. By adding the compound represented by the formula (7), changes in the appearance of the reflection layer and an increase in signal reading errors after the resulting optical disk is left under a high-temperature and high-humidity environment for a long time, can be remarkably minimized.

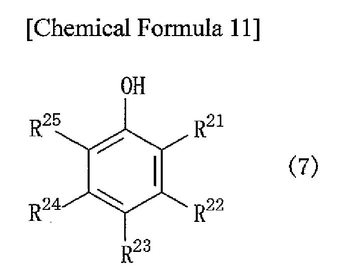

(wherein, R²¹, R²², R²³ , R²⁴, and R²⁵ each represent, independently, (i) a hydrogen atom, (ii) a halogen atom, (iii) a hydroxyl group, (iv) an alkoxy group of 1 to 8 carbon atoms, (v) a carboxyl group, (vi) a group represented by the formula (8):

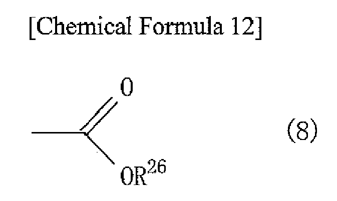

(wherein, R²⁶ represents an alkyl group of 1 to 20 carbon atoms which may be substituted with a halogen atom, or an alkenyl group of 1 to 20 carbon atoms which may be substituted with a halogen atom), or (vii) an alkyl group or alkenyl group of 1 to 24 carbon atoms which may have, as a substituent, a carboxyl group, an alkoxycarbonyl group, an acyloxyl group, or an alkoxy group, provided that at least one of R²¹, R²², R²³, R²⁴, and R²⁵ is a hydroxyl group).

The compound represented by the formula (7) includes compounds of various structures. Of these, preferred are compounds represented by the following formula (9), formula (10), formula (11), and formula (12):

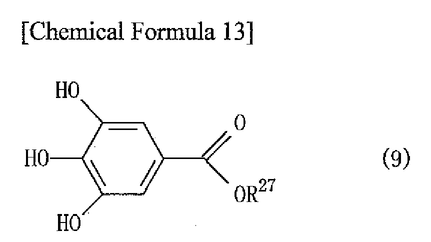

(wherein, R²⁷ represents a hydrogen atom, an alkyl group of 1 to 20 carbon atoms which may be substituted with a halogen atom, or an alkenyl group of 1 to 20 carbon atoms which may be substituted with a halogen atom);

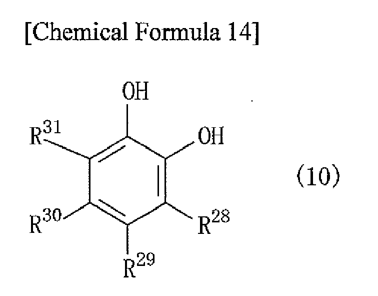

(wherein, R²⁸, R²⁹, R³⁰, and R³¹ each represent, independently, a hydrogen atom, a halogen atom, an alkoxy group of 1 to 8 carbon atoms, an alkyl group of 1 to 24 carbon atoms which may have, as a substituent, -COOH, -COOR¹³, -OCOR¹⁴, or -OR¹⁵, or an alkenyl group of 1 to 24 carbon atoms which may have, as a substituent, -COOH, -COOR³², -OCOR³³, or -OR³⁴ (wherein, R³², R³³, and R³⁴ each represent, independently, an alkyl group of 1 to 8 carbon atoms or an alkenyl group of 1 to 8 carbon atoms);

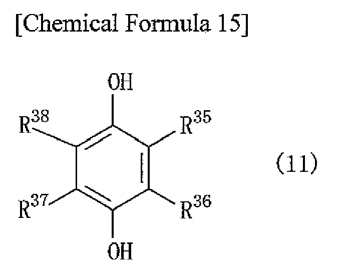

(wherein, R³⁵, R³⁶, R³⁷, and R³⁸ each represent, independently, a hydrogen atom, a halogen atom, an alkoxy group of 1 to 8 carbon atoms, an alkyl group of 1 to 24 carbon atoms which may have, as a substituent, -COOH, -COOR³², -OCOR³³, or -OR³⁴, or an alkenyl group of 1 to 24 carbon atoms which may have, as a substituent, -COOH, -COOR³², -OCOR³³ , or -OR³⁴ (wherein, R³², R³³, and R³⁴ each represent, independently, an alkyl group of 1 to 8 carbon atoms or an alkenyl group of 1 to 8 carbon atoms)); and

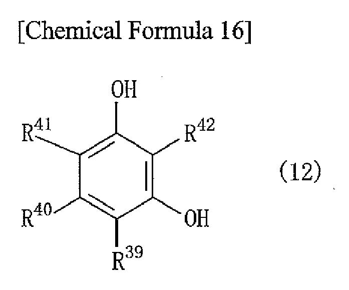

(wherein, R³⁹, R⁴⁰, R⁴¹, and R⁴² each represent, independently, a hydrogen atom, a halogen atom, an alkoxy group of 1 to 8 carbon atoms, an alkyl group of 1 to 24 carbon atoms which may have, as a substituent, -COOH, -COOR³², -OCOR³³, or -OR³⁴, or an alkenyl group of 1 to 24 carbon atoms which may have, as a substituent, -COOH, -CODR³², -OCOR³³, or -OR³⁴ (wherein, R³², R³³, and R³⁴ each represent, independently, an alkyl group of 1 to 8 carbon atoms or an alkenyl group of 1 to 8 carbon atoms)).

The alkyl group and the alkenyl group in the formula (9) may be linear or branched. It is preferable that the halogen atom be a fluorine atom, a chlorine atom, a bromine atom, or an iodine atom. In particular, it is preferable that R²⁷ be a hydrogen atom or a non-substituted alkyl group of 1 to 20 carbon atoms which may have a branched chain. Moreover, it is more preferable that R²⁷ be a hydrogen atom or a non-substituted alkyl group of 1 to 8 carbon atoms which may have a branched chain. Furthermore, it is particularly preferable that R²⁷ be a hydrogen atom or a non-substituted alkyl group of 1 to 4 carbon atoms.

Specific examples of the gallate ester represented by the formula (9) include methyl gallate, ethyl gallate, propyl gallate, isopropyl gallate, isopentyl gallate, octyl gallate, dodecyl gallate, tetradecyl gallate, hexadecyl gallate, and octadecyl gallate. As the compound represented by the formula (9), gallic acid is preferably used. The gallic acid is readily available as a commercial product, such as a product manufactured by Dainippon Sumitomo Pharmaceutical Co., Ltd.

In the formula (10), specific examples of R²⁸, R²⁹, R³⁰, and R³¹ include (i) a hydrogen atom, (ii) a halogen atom such as a fluorine atom, a chlorine atom, a bromine atom, or an iodine atom, (iii) an alkoxy group such as methoxy, ethoxy, butoxy, or octyloxy, (iv) an alkyl group such as methyl, butyl, hexyl, octyl, lauryl, or octadecyl, (v) an alkenyl group such as ethenyl, propenyl, or 2-butenyl, and (vi) 4-carboxybutyl, 2-methoxycarbonylethyl, methoxymethyl, or ethoxymethyl.

Preferred compounds represented by the formula (10) are catechol, 3-sec-butylcatechol, 3-tert-butylcatechol, 4-sec-butylcatechol, 4-tert-butylcatechol, 3,5-di-tert-butylcatechol, 3-sec-butyl-4-tert-butylcatechol, 3-terf-butyl-5-sec-bulylcatechol, 4-octylcatechol, and 4-stearylcatechol. More preferred are catechol and 4-tert-butylcatechol. In particular, it is preferable to use 4-tert-butylcatechol. As a commercial product of 4-tert-butylcatechol, "DIC TBC-5P" manufactured by Dainippon Ink and Chemicals Inc. can be exemplified.

Specific examples of R³⁵, R³⁶, R³⁷, and R³⁸ in the formula (11) and specific examples of R³⁹, R⁴⁰, R⁴¹, and R⁴² in the formula (12) include a hydrogen atom, a methyl group, a propyl group, a hexyl group, a nonyl group, a dodecyl group, an iso-butyl group, a sec-butyl group, a tert-butyl group, a neopentyl group, an iso-hexyl group, and a tert-octyl group.

Preferred compounds of the formula (11) are hydroquinone, 2-hydroxyhydroquinone, 2,5-di-tert-butylhydroquinone, 2,5-bis(1,1,3,3-tetramethylbutyl)hydroquinone, and 2,5-bis(1,1-dimethylbutyl)hydroquinone. In addition, of these compounds represented by the formula (11), preferred are resorcinol (benzene-1,3-diol) and orcinol (5-methylbenzene-1,3-diol). Of these compounds represented by the formula (11), it is more preferable to use hydroquinone (benzene-1,4-diol) or 2-hydroxyhydroquinone (benzene-1,2,4-triol). In addition, other preferred compounds represented by the formula (12) for use in the present invention include pyrogallol (1,2,3-trihydroxybenzene).

Of compounds represented by the formula (9) to the formula (12), particularly preferred are gallic acid and gallate esters represented by the formula (9), and hydraquinane-based compounds represented by the formula (11). These compounds are capable of improving the durability under a high-temperature and high-humidity environment, and thus are particularly preferable among the compounds represented by the formula (7). Moreover, of the compounds represented by the formula (7), most preferred is gallic acid.

The quantity of the compound represented by the formula (7) to be added to the ultraviolet-curable composition, is preferably 0.01 to 5% by mass, and more preferably 0.02 to 0.5% by mass, relative to the total amount of the ultraviolet-curable composition.

The viscosity of the ultraviolet-curable composition of the present invention is preferably 1000 to 2500 mPa·s. By setting the viscosity within such a range, the light transmission layer of the optical disk can be suitably prepared.

The ultraviolet-curable composition of the present invention is preferably prepared so that the dynamic elastic modulus of the cured film obtained after irradiation of ultraviolet rays is 2000 MPa (at 30°C) or higher. In particular, more preferable is the composition capable of achieving the elastic modulus of 2500 MPa. When the composition can achieve the elastic modulus within such a range, deformation less likely occurs even if a strong pressure is applied to the light transmission layer, and the mechanical strength of the optical disk can be readily improved. In addition, even if exposed to a high-temperature and high-humidity environment for a long time, changes in the appearance of the reflection layer and an increase in signal reading errors can be remarkably minimized.

### [Optical disk]

The optical disk of the present invention is an optical disk which has at least a light reflection layer and a light transmission layer formed on a substrate, for recording or reading with a laser beam transmitting through the light transmission layer, wherein the light transmission layer comprises a cured product of the ultraviolet-curable composition mentioned above. By using the above-mentioned ultraviolet-curable composition to form the light transmission layer, the optical disk of the present invention is hardly deformed even if a strong pressure is applied to the light transmission layer, and is given excellent recording and reading properties even under severe usage conditions. In addition, excellent durability and light resistance are given even if silver or a silver alloy is used as a reflection layer. Furthermore, the abrasion resistance of the hard coat can be improved.

The light transmission layer in the optical disk of the present invention preferably allows efficient transmission of a blue laser beam whose emission wavelength is 370 to 430 nm. The thickness of the light transmission layer is within a range of 50 to 150 µm, and preferably within a range of 75 to 150 µm. The thickness of a light transmission layer is usually set at about 100 µm, although it should be adequately adjusted since the thickness remarkably influences the light transmittance or performance of signal reading and recording. The light transmission layer may be formed of a single cured film in such a thickness, or may also be formed of a lamination of a plurality of films.

The light reflection layer may be any layer which can reflect a laser beam and which can form a data recordable and readable optical disk. For example, metals such as gold, copper, and aluminum, alloys thereof, or inorganic compounds such as silicone can be used. Of these, silver or an alloy containing silver as a main component are preferably used as they offer high reflectance with respect to a beam of about 400 nm. The thickness of the light reflection layer is preferably about 10 to 60 nm.

A disk-shaped circular resin substrate can be used as the substrate, and a polycarbonate is preferably used for the resin. If the optical disk is a read-only disk, pits responsible for data-recording are formed on the surface of the substrate that the light reflection layer is laminated thereon.

In addition, in a case of a writable optical disk, a data-recording layer is provided between the light reflection layer and the light transmission layer. The data-recording layer may be any layer which is capable of recording and reading, and may be any of a phase-change recording layer, an optical magnetic recording layer, and an organic pigment recording layer.

If the data-recording layer is a phase-change recording layer, the data-recording layer usually comprises a dielectric layer and a phase-change film. It is required for the dielectric layer to have a function that buffers heat generated in the phase-change layer and a function that adjusts the reflectance of the disk, and a mixed composition of ZnS and SiO₂ is used therefor. The phase-change film generates a reflectance difference between an amorphous state and a crystal state due to the phase change of the film, and a Ge-Sb-Te-based, Sb-Te-based, or Ag-In-Sb-Te-based alloy can be used therefor.

Two or more data-recording areas may be formed in the optical disk of the present invention. For example, in a case of a read-only optical disk, the structure may be such that a first light reflection layer and a first light transmission layer are laminated on a substrate having pits, and a second light reflection layer and a second light transmission layer are formed on the first light transmission layer or on other layers laminated on the first light transmission layer. In this case, pits are formed on the first light transmission layer or on other layers laminated thereon. Meanwhile, in a case of a recordable and readable optical disk, the structure is such that a data-recording layer, a light reflection layer, and a light transmission layer are laminated on a substrate. However, the structure may also be such that a second light reflection layer, a second data-recording layer, and a second light transmission layer are further formed on the light transmission layer to achieve double data-recording layers, or such that more layers are formed thereon in the same manner to achieve triple or more data-recording layers. When a plurality of layers are laminated, the thickness of each layer may be suitably adjusted so that the total thickness of respective layers is within the above-mentioned range.

In addition, a light transmission layer may come on the top of the optical disk of the present invention. Or, a surface coat layer may be further provided on the top of the light transmission layer.

The optical disk of the present invention includes a read-only disk and a recordable and readable disk. The read-only disk can be produced by the following procedure. Upon formation of a piece of a disk-shaped resin substrate by injection molding, pits serving as a data-recording layer are provided. Next, a light reflection layer - is formed on the data-recording layer, and an ultraviolet-curable composition is further coated on the light reflection layer by spin coating or the like. Then, the coated ultraviolet-curable composition is cured by irradiating ultraviolet rays to form a light transmission layer. Moreover, the recordable and readable disk can be produced by the following procedure. A light reflection layer is formed on a piece of a disk-shaped resin substrate. Next, a data-recording layer such as a phase-change film or an optical magnetic recording film is provided thereon, and an ultraviolet-curable composition is further coated on the light reflection layer by spin coating or the like. Then, the coated ultraviolet-curable composition is cured by irradiating ultraviolet rays to form a light transmission layer.

For curing the ultraviolet-curable composition coated on the light reflection layer by irradiating ultraviolet rays, for example, a continuous irradiation system may be adopted with a metal halide lamp, a high-pressure mercury lamp, or the like. Or, a flashing discharge system as described in United States Patent No. 5904795 may also be adopted. The flashing discharge system is more preferable since such a system enables efficient curing of the composition.

When ultraviolet rays are irradiated, the irradiation may be preferably controlled so that the accumulated light amount is 0.05 to 1 J/cm². The accumulated light amount is more preferably 0.05 to 0.8 J/cm², and particularly preferably 0.05 to 0.6 cm². The ultraviolet-curable composition for use in the optical disk of the present invention can be sufficiently cured even if the accumulated light amount is small. Therefore, tackiness hardly occurs on the edge surface or the front surface of optical disk, and furthermore, tilt or distortion of the optical disk hardly occurs.

[Embodiments] Hereunder is a description of examples of specific configurations of a single layer optical disk and a dual layer optical disk as specific examples of the optical disk of the present invention.

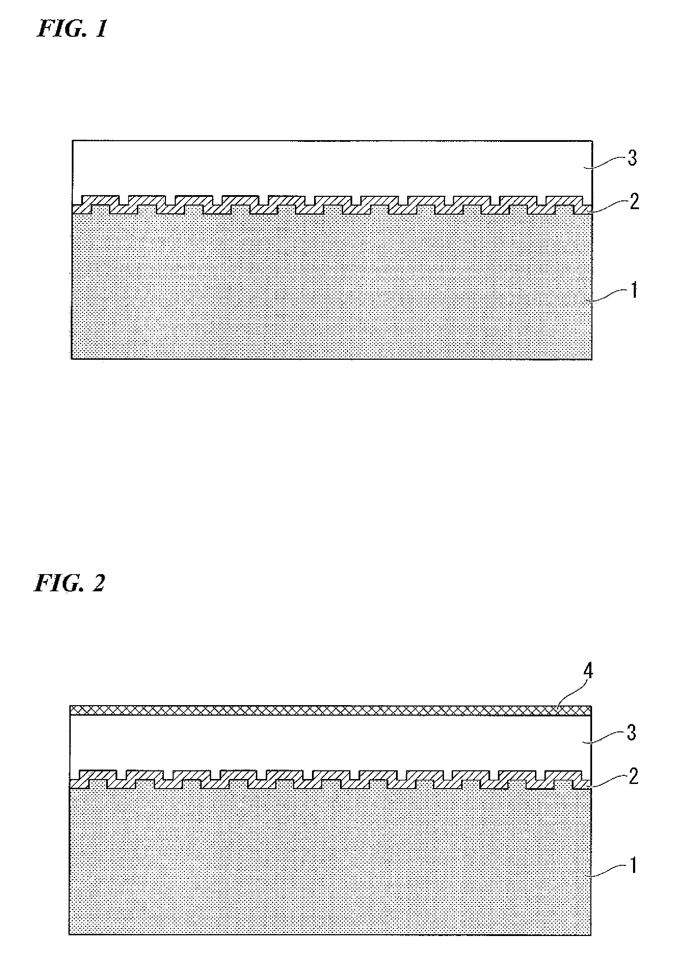

As a preferable embodiment of the single layer optical disk of the optical disk according to the present invention, a configuration as shown in FIG 1 can be exemplified in which a light reflection layer 2 and a light transmission layer 3 are laminated on a substrate 1, for recording or reading data by allowing a blue laser beam to enter from the side of the light transmission layer. The projected or recessed parts shown in FIG 1 schematically represent recording tracks (grooves). The light transmission layer 3 is formed of a cured product of the ultraviolet-curable composition of the present invention, and its thickness is within a range of 100 ± 10 µm. The thickness of the substrate 1 is about 1.1 mm, and the light reflection layer is a thin film of silver or the like.

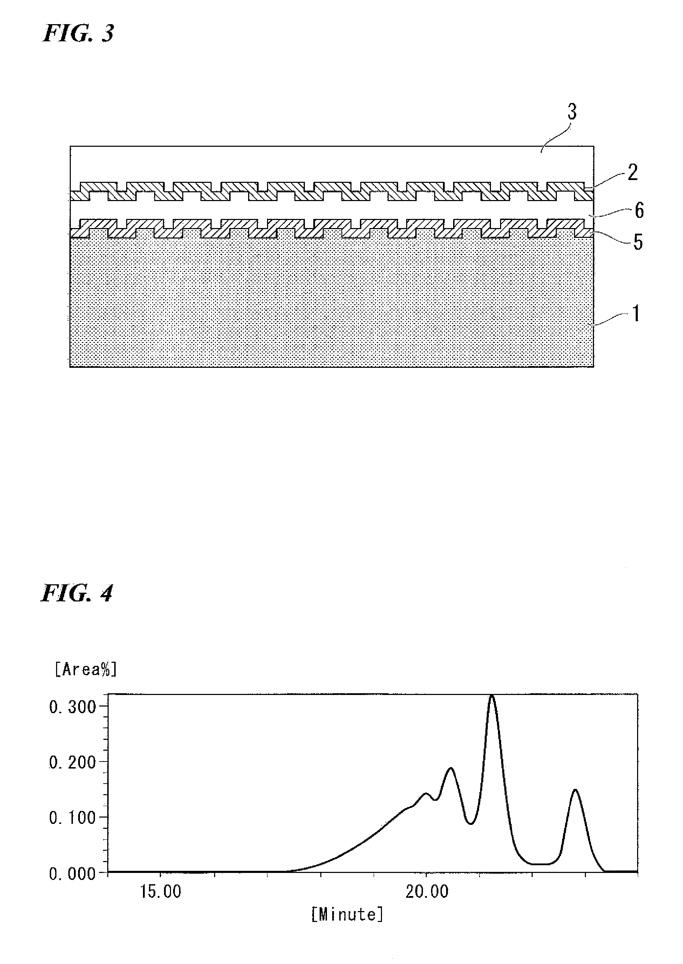

FIG. 2 shows a configuration in which a hard coat layer 4 is provided on the top of the structure of FIG. 1. It is preferable that the hard coat layer has higher hardness to achieve excellent abrasion resistance. The thickness of the hard coat layer is preferably 1 to 10 µm, and more preferably 3 to 5 µm.
As a preferable embodiment of a multilayer optical disk, a configuration of a dual layer optical disk as shown in FIG. 3 can be exemplified in which a light reflection layer 5 and a light transmission layer 6 are laminated on a substrate 1, and further a light reflection layer 2 and a light transmission layer 3 are laminated thereon, for recording or reading data by allowing a blue laser beam to enter from the side of the light transmission layer 3. The light transmission layer 3 and the light transmission layer 6 are formed of cured products of ultraviolet-curable compositions, and at least either one of them is formed of a cured product of the ultraviolet-curable composition of the present invention. Regarding the thicknesses of these layers, the total thickness of the light transmission layer 3 and the light transmission layer 6 is within a range of 100 ± 10 µm. The thickness of the substrate 1 is about 1.1 mm. The reflection layer is a thin film of silver or the like.

In the dual layer optical disk of this configuration, recording tracks (grooves) are also formed on the surface of the light transmission layer 6. Therefore, the light transmission layer 6 may also be formed of a plurality of layers including a layer which is composed of a cured film of an ultraviolet-curable composition having excellent adhesion properties, and a layer which is laminated thereon and is composed of a cured film of an ultraviolet-curable composition that is capable of suitably forming recording tracks. In addition, a hard coat layer may also be provided as a top layer in this configuration.

Hereunder is a description of a method for producing the optical disk shown in FIG. 1.
First, the substrate 1 having guide grooves, so-called recording tracks (grooves), for tracking a laser beam is produced by injection molding of a polycarbonate resin. Next, the light reflection layer 2 is formed by sputtering or evaporating a silver alloy or the like on the surface of the substrate 1 on a side where recording tracks are provided. The ultraviolet-curable composition of the present invention is coated thereon, and ultraviolet rays are irradiated to one side or both sides of the disk to cure the ultraviolet-curable composition, to thereby form the light transmission layer 3. By so doing, the optical disk of FIG. 1 is produced. To produce the optical disk of FIG. 2, the hard coat layer 4 is further formed thereon by spin coating or the like.

Hereunder is a description of a method for producing the optical disk shown in FIG. 3.
First, the substrate 1 having guide grooves, so-called recording tracks (grooves), for tracking a laser beam is produced by injection molding of a polycarbonate resin. Next, the light reflection layer 6 is formed by sputtering or evaporating a silver alloy or the like on the surface of the substrate 1 on a side where recording tracks are provided.

The light transmission layer 5 is formed thereon by using the ultraviolet-curable composition of the present invention or an optional ultraviolet-curable composition. At this time, recording tracks (grooves) are transferred onto the surface thereof by using a mold. The process of transferring the recording tracks (grooves) is as follows. The ultraviolet-curable composition is coated on the light reflection layer 6 formed on the substrate 1, and the mold for forming the recording tracks (grooves) is adhered thereon. One side or both sides of the thus adhered disk is irradiated with ultraviolet rays to cure the ultraviolet-curable composition. Then, the mold is taken out, and a silver alloy or the like is sputtered or evaporated on the surface of the light transmission layer 5 on a side having the recording tracks (grooves), to thereby form the light reflection layer 2. The ultraviolet curable composition is coated thereon, and then cured by ultraviolet irradiation to form the light transmission layer 3. By so doing, the optical disk of FIG. 3 can be produced. In addition, in a case where a phase-change recording layer is used as the light reflection layer, the optical disk can be produced in the same manner as described above.

### Examples

Next is a detailed description of the present invention with reference to Synthesis Examples and Examples. However, the present invention is in no way limited to these Examples. Hereinunder, the term "part" refers to "part by mass" in the Examples.

In the present invention, the average molecular weight was measured using gel permeation chromatography (GPC) under the following conditions.
Measurement instrument: HLC-8220 manufactured by TOSO Co. Ltd.
Columns: a guard column HXL-H manufactured by TOSO Co. Ltd. + four columns of Super HZM-M manufactured by TOSO Co. Ltd.
Detector: RI (differential refractometer)
Measurement conditions:
Column temperature of 40°C
Solvent of tetrahydrofuran
Flow rate of 1.0 ml/minute
Standard: polystyrene
Sample: a filtrate (100 µl) of a tetrahydrofuran solution (0.4% by weight based on the resin solid content) through a microfilter.

### <Synthesis Example 1>

In a flask fitted with a thermometer, a stirrer, and a reflux condenser, 65.5 g of phenoxy ethyl acrylate was charged and dissolved with 189 g of a bisphenol A-type epoxy resin (epoxy equivalent weight of 189 g/equivalent; EPICLON 850, manufactured by Dainippon Ink and Chemicals Inc.). Then, 0.1 g of hydroquinone was added thereto as a polymerization inhibitor, and subsequently 50.7 g (0.7 mol) of acrylic acid was charged. As a catalyst, 0.48 g of triphenylphosphine was added. The temperature was raised to 130°C over two hours under stirring. The mixture was held for six hours at 130°C until the acid value was confirmed to reach 0 mg/KOH. Thereafter, the temperature was lowered to 80°C, and 22.2 g (0.3 mol) of acrylic acid was charged. The temperature was again raised to 130°C over one hour. The mixture was added with 0.48 g of triphenylphosphine, and was held for four hours, thereby yielding a pale yellow, transparent, resin-like reaction mixture (acid value = 0.2 mg/KOH, Gardner viscosity of the product diluted with butyl acetate (reaction mixture/butyl acetate = 80/20) = U² -V, epoxy equivalent weight = 15,000) including a branched epoxy acrylate (EA1).

The thus yielded mixed solution of the branched epoxy (meth)acrylate (EA1) was measured for the molecular weight distribution by GPC (FIG. 4). The obtained results showed that the branched epoxy (meth)acrylate (EA1) had a number average molecular weight (Mn) of 2507 and a weight average molecular weight (Mw) of 3786. In addition, the area ratio of the branched epoxy acrylate (EA1) to the epoxy acrylate represented by the formula (5) mentioned above, expressed by (branched epoxy acrylate)/(epoxy acrylate represented by the formula (5)), was 1.63.

### <Synthesis Example 2>

Using the same device as that of Synthesis Example 1, 65.5 g of phenoxy ethyl acrylate was charged, and was dissolved with 189 g of a bisphenol A-type epoxy resin. Then, 0.1 g of hydroquinone was added thereto as a polymerization inhibitor, and subsequently 43.4 g (0.6 mol) of acrylic acid was charged. As a catalyst, 0.46 g of triphenylphosphine was added. The temperature was raised to 130°C over two hours under stirring. The mixture was held for six hours at 130°C until the acid value was confirmed to reach 0 mg/KOH. The temperature was lowered to 80°C, and 29.5 g (0.4 mol) of acrylic acid was charged. The temperature was again raised to 130°C over one hour. The mixture was added with 0.46 g of triphenylphosphine, and was held for four hours, thereby yielding a pale yellow, transparent, resin-like reaction mixture (acid value = 0.2 mg/KOH, Gardner viscosity of the product diluted with butyl acetate (reaction mixture/butyl acetate = 80/20)= V² -W, epoxy equivalent weight =11,000) including a branched epoxy acrylate (EA2).

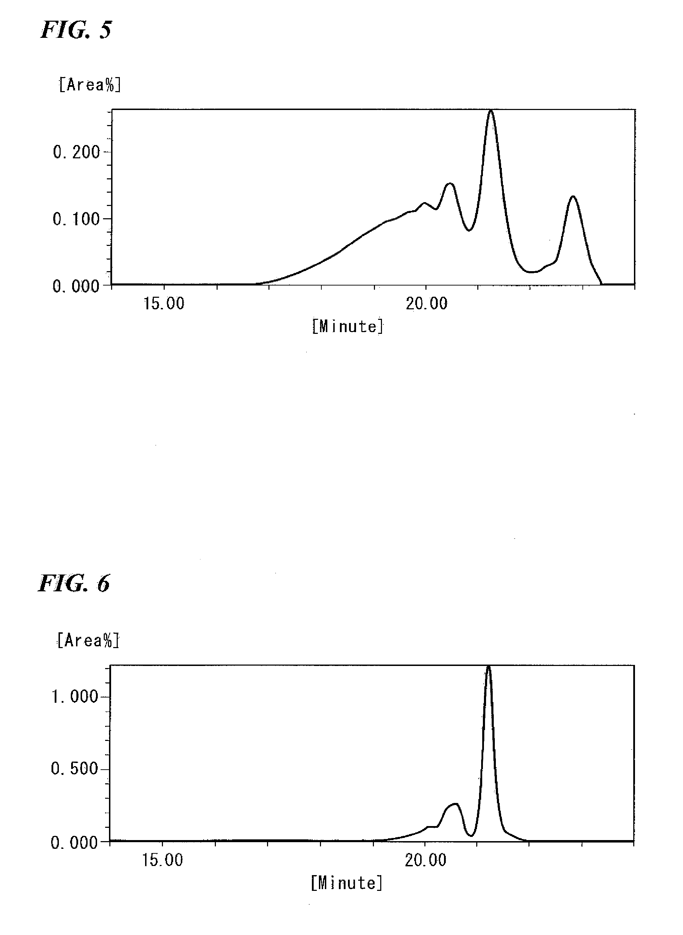

The thus yielded mixed solution of the branched epoxy acrylate (EA2) was measured for the molecular weight distribution by GPC (FIG. 5). The obtained results showed that the branched epoxy acrylate (EA1) had a number average molecular weight (Mn) of 2934 and a weight average molecular weight (Mw) of 5205. In addition, the area ratio of the branched epoxy acrylate (EA1) to the epoxy acrylate represented by the formula (5) mentioned above, expressed by (branched epoxy acrylate)/(epoxy (meth)acrylate represented by the formula (5)), was 1.97.

### <Synthesis Example 3>

Using the same device as that of Synthesis Example 1, 189 g of a bisphenol A-type epoxy resin was dissolved. Then, 0.1 g of hydroquinone was added as a polymerization inhibitor, and subsequently 72.4 g (1 mol) of acrylic acid was charged. As a catalyst, 1.31 g of triphenylphosphine was added. The temperature was raised to 110°C over two hours under stirring. The mixture was held for six hours at 110°C, thereby yielding a pale yellow, transparent, resin-like reaction mixture (acid value = 0.2 mg/KOH, Gardner viscosity of the product diluted with butyl acetate (reaction mixture/butyl acetate = 80/20) = X, epoxy equivalent weight =12,000) including an epoxy (meth)acrylate (EA3). The thus yielded epoxy acrylate (EA3) was measured for the molecular weight distribution by GPC (FIG. 6). The obtained results showed that the epoxy acrylate (EA3) had a number average molecular weight (Mn) of 1010 and a weight average molecular weight (Mw) of 1063.

### <Synthesis Example 4>

Using the same device as that of Synthesis Example 1, 230 g of caprolactone-modified β-hydroxyethyl acrylate (hydroxyl group value = 244 mg/KOH, Placcel FA1-DDM manufactured by Daicel Chemical Industries, Ltd.), 148 g of phthalic anhydride, and 0.1 g of hydroquinone as a polymerization inhibitor were charged. The temperature was then raised to 120°C over two hours under stirring. The mixture was held for ten hours at 120°C until the acid value was confirmed to reach 148 mg/KOH. Thereafter, the temperature was lowered to 80°C. Then, 189 g of a bisphenol A-type epoxy resin and 2.85 g of triphenylphosphine were added thereto. The temperature was again raised to 120°C. The mixture was then held for four hours, thereby yielding a pale yellow, transparent, resin-like reaction mixture (acid value = 0.7, viscosity of the product diluted with butyl acetate (reaction mixture/butyl acetate = 70/30)= F-G, epoxy equivalent weight = 10,200) including an epoxy acrylate resin (EA4). The results from the measurement of the molecular weight distribution by GPC showed that the epoxy acrylate resin (EA4) had a number average molecular weight (Mn) of 1360 and a weight average molecular weight (Mw) of 3840.

### <Production of ultraviolet-curable composition>

Each mixture according to the compositional ratio shown in the following Table 1 and 2 was heated at 60°C for one hour, and was dissolved to thereby prepare an ultraviolet-curable composition of Examples 1 to 5 or Comparative Examples 1 to 7. The yielded composition was subjected to the following evaluations.

### <Method for measuring viscosity>

The viscosity of the ultraviolet-curable composition was measured at 25°C using a B-type viscometer (BM type) manufactured by TOKYO KEIKI INC.

### <Method for measuring elastic modulus>

The ultraviolet-curable composition was coated on a glass plate so that the cured coating film had a thickness of 100 ± 10 µm. Then, the coated composition was cured in a nitrogen atmosphere at 500 mJ/cm² using a metal halide lamp (equipped with a cold mirror and the lamp output was 120 W/cm). The elastic modulus of this cured coating film was measured with an auto dynamic viscous elasticity analyzer manufactured by TA Instruments, and the dynamic elastic modulus E' at 30°C was deemed to be the elastic modulus.

### <Cure shrinkage rate>

The liquid density of the composition at 25°C before curing, and the solid density of the cured coating film at 25°C after curing were respectively measured to obtain the cure shrinkage rate based on the following equation, and was evaluated as follows.
The method for producing the cured coating film was the same as the production method for measuring the elastic modulus. $c ⁢ u ⁢ r ⁢ e s ⁢ h ⁢ r ⁢ i ⁢ n ⁢ k ⁢ a ⁢ g ⁢ e r ⁢ a ⁢ t ⁢ e \left(%\right) = \left[\left\{\left(s⁢o⁢l⁢i⁢d d⁢e⁢n⁢s⁢i⁢ty\right)-\left(l⁢i⁢q⁢u⁢i⁢d d⁢e⁢n⁢s⁢i⁢t⁢y\right)\right\}/\left(s⁢o⁢l⁢i⁢d d⁢e⁢n⁢s⁢i⁢t⁢y\right)\right] \times 100$

### <Conditions for producing optical disk>

A polycarbonate substrate having a diameter of 120 mm and a thickness of 1.1 mm was prepared, on which a silver alloy target GBD05 (an alloy containing silver as a main component and bismuth, manufactured by KOBELCO Research Institute, Inc.) was sputtered in a thickness of 20 to 40 nm. Then, over the metal reflection layer, each composition of Table 1 was applied so that the cured film thickness would be 100 ± 5 µm, using a coating test machine manufactured by Origin Electric Co., Ltd. Ultraviolet rays were irradiated thereon, one shot for pre-curing (at a charging voltage of 3420 V) and fifteen shots for main-curing (at a charging voltage of 3420 V), with a flash lamp (Model: FUV-201 WJ02) manufactured by Ushio Inc., to effect curing to yield a test sample disk.

### <Evaluation of tilt>

The radial tilt was measured by using an Argus Blu device manufactured by Dr. Schwab Inspection Technology GmbH. The radial tilt was obtained from the average radial tilt in the region from a radius of 55 mm to a radius of 56 mm. Each composition of Table 1 was measured for the initial radial tilt and the radial tilt after curing. In addition, each sample disk was exposed to a high-temperature and high-humidity environment at 80°C and 85% RH for 240 hours (durability test) by using an environment tester PR-2PK device (manufactured by Espec Corporation), to obtain the radial tilt after the test. In Table 1, the radial tilt before the durability test was obtained by measuring the radial tilt of a cured product of each composition after being left in an environment at 25°C and 45% RH for one day, and the radial tilt after the durability test was obtained by measuring the radial tilt of each sample disk after being left in an environment at 80°C and 85% RH for 240 hours, then taken out therefrom, and left in an environment at 25°C and 45% RH for one day. The radial tilt after curing and the radial tilt after the durability test were evaluated as follows. Here, positive values (+) of the radial tilt mean that the opposite side to the side applied with the composition was tilted, and negative values (-) mean that the side applied with the composition was tilted.
○: within ± 0.8 degrees
×: over ± 0.8 degrees

### <Measurement of error rate of optical disk>

Each sample disk was exposed to a high-temperature and high-humidity environment at 80°C and 85% RH for 240 hours (durability test) by using an environment tester PR-2PK device (manufactured by Espec Corporation). The error rate, Random SER, of each sample disk was measured by using an INSPECTOR device manufactured by Pulstec Industrial Co., Ltd. The average Random SER after the durability test was evaluated as follows.
○ : less than or equal to 2 x 10⁻⁴
△ : more than 2 x 10⁻⁴ and less than or equal to 5 x 10⁻³
× : more than 5 x 10⁻³

**[Table 1]**

| | | Example 1 | Example 2 | Example 3 | Example 4 | Examples 5 |
|---|---|---|---|---|---|---|
| Epoxy acrylate | EA1 | 60 | 67 | | 54 | 72 |
| | EA2 | | | 56 | | |
| | EA3 | | | | | |
| | EA4 | | | | | |
| Bifunctional acrylate | TCDDA | | | | | |
| | HPNDA | 30 | | 34 | 10 | |
| | CL-HPNDA | | | | | |
| | BisA-4EO-DA | | | | 10 | |
| Monofunctional acrylate | PEA | 8 | 31 | 8 | 24 | |
| | THF-A | | | | | 26 |
| Additive | PM-2 | 0.01 | 0.01 | 0.01 | 0.01 | 0.01 |
| | GA | 0.05 | 0.05 | 0.05 | 0.05 | 0.05 |
| Photopolymerization | Irg.184D | 2 | 2 | 2 | 2 | 2 |
| initiator | | | | | | |
| Viscosity (mPa.s/25°C) | | 2090 | 2020 | 1920 | 1620 | 2170 |
| Elastic modulus (MPa/30°C) | | 2760 | 2270 | 2940 | 2870 | 2880 |
| Cure shrinkage rate (%) | | 5.9 | 5.6 | 5.6 | 5.5 | 5.9 |
| Error rate | Initial value | 3.87 x 10⁻⁵ | 4.79 x 10⁻⁵ | 4.09 x 10⁻⁵ | 4.94x 10⁻⁵ | 2.19 x 10⁻⁵ |
| Random SER (ave.) | 240 hr | 4.12 x 10⁻⁵ | 5.09 x 10⁻⁵ | 5.84x10⁻⁵ | 5.43x10⁻⁵ | 3.67x10⁻⁵ |
| | Evaluation | ○ | ○ | ○ | ○ | ○ |
| Changes in tilt | lnitial radial tilt | 0.83 | 0.84 | 0.85 | 0.71 | 0.56 |
| | Radial tilt after curing | -0.52 | 0.43 | -0.53 | -0.34 | -0.41 |
| | Evaluation | ○ | ○ | ○ | ○ | ○ |
| | Radial tilt before environment test | 0.45 | 0.81 | 0.74 | 0.25 | 0.40 |
| | Radical tilt after environment test | -0.41 | 0.13 | -0.78 | -051 | -0.03 |
| | Evaluation | ○ | ○ | ○ | ○ | ○ |

**[Table 2]**

| | | Com. Example 1 | Com. Example 2 | Com. Example 3 | Com. Example 4 | Com. Example 5 | Com. Example 6 | Com. Example 7 |
|---|---|---|---|---|---|---|---|---|
| Epoxy acrylate | EA1 | | | | | | | |
| | EA2 | | | | | | | |
| | EA3 | 53 | 60 | 46 | | 37 | 41 | 23 |
| | EA4 | | | | 34 | | | |
| Bifunctional | TCDDA | | | | 64 | | | |
| acrylate | HPNDA | 30 | | 15 | | 30 | | 34 |
| | CL-HPNDA | | | 30 | | | | |
| | BisA-4EO-DA | | | | | | | |
| Monofunctional | PEA | 15 | 38 | 7 | | 8 | 31 | 8 |
| acrylate | THF-A | | | | | | | |
| Additive | PM-2 | 0.01 | 0.01 | 0.01 | 0.01 | 0.01 | 0.01 | 0.01 |
| | GA | 0.05 | 0.05 | 0.05 | 0.05 | 0.05 | 0.05 | 0.05 |
| Photopolymerization | Irg.184D | 2 | 2 | 2 | 2 | 2 | 2 | 2 |
| initiator | | | | | | | | |
| Viscosity (mPa·s/25°C) | | 2040 | 2070 | 1960 | 1820 | 1210 | 1050 | 490 |
| Elastic modulus (MPa/30°C) | | 3120 | 3360 | 2330 | 3040 | 3200 | 3060 | 2850 |
| Cure shrinkagerate (%) | | 6.1 | 5.6 | 5.8 | 6.0 | 6.3 | 5.9 | 6.4 |
| Errorrate Random SER (ave.) | Initial value | 1.45 x | 1.67 x | 2.97 x | 4.54 x | 3.24 x | 3.89 x | - |
| | 240 hr | 10⁻⁵ Note 2 | 10⁻⁵ Note 2 | 10⁻⁵ Note 2 | 10⁻⁵ Note 1 | 10⁻⁵ Note 1 | 10⁻⁵ 1.40x 10⁻² | - |
| | Evaluation | × | × | × | × | × | × | - |
| Changes in tilt | Initial radial tilt | 0.79 | 0.77 | 0.79 | 0.89 | 0.50 | 0.48 | - |
| | Radial tilt after curing | -0.79 | 0.00 | -021 | -138 | -1.37 | -0.15 | - |
| | Evaluation | ○ | ○ | ○ | × | × | ○ | - |
| | Radial tilt before environment test | 0.05 | 0.53 | 0.29 | -0.67 | 0.26 | 0.42 | - |
| | Radial tilt after environment test | -1.26 | -0.71 | -0-26 | -1.90 | -1.19 | 0.24 | - |
| | Evaluation | × | ○ | ○ | × | × | ○ | - |

| | | | | | | | | |
|---|---|---|---|---|---|---|---|---|
| Note 1: The radial tilt was too large to measure the error rate by the signal detector. Note 2: The reflection layer was too corroded to measure the error rate by the signal detector (the upper limit of the detector was 10⁻²). | | | | | | | | |

The meanings of the abbreviations in Table 1 are as follows.
EA1: A mixture of the epoxy acrylate (EA1) obtained from Synthesis Example 1 and an epoxy acrylate represented by the formula (5) (epoxy (meth)acrylate (EA1)/epoxy (meth)acrylate represented by the formula (5) = 1.63)
EA2: A mixture of the epoxy (meth)acrylate (EA2) obtained from Synthesis Example 2 and an epoxy (meth)acrylate represented by the formula (5) (epoxy (meth)acrylate (EA1)/epoxy (meth)acrylate represented by the formula (5) = 1.97)
EA3: The epoxy (meth)acrylate (EA3) obtained from Synthesis Example 3
EA4: The epoxy (meth)acrylate (EA4) obtained from Synthesis Example 4
TCDDA: tricyclodecane dimethanol diacrylate
HPNDA: hydroxypivalate neopentyl glycol diacrylate
CL-HPNDA: caprolactone-modified hydroxypivalate neopentyl glycol diacrylate, HX-220 (manufactured by Nippon Kayaku Co., Ltd.)
BisA-4EO-DA: ethylene oxide-modified (4 moles) bisphenol A diacrylate
PEA: phenoxy ethyl acrylate
THF-A: tetrahydrofurfuryl acrylate
PM-2: ethylene oxide-modified dimethacrylate phosphate (manufactured by Nippon Kayaku Co., Ltd.)
GA: gallic acid (manufactured by Dainippon Sumitomo Pharma Co., Ltd.)
Irg.184: Irgacure 184 (manufactured by Ciba Japan K.K.)

As apparent from the above description, the ultraviolet-curable compositions of Examples 1 to 3 including the branched epoxy (meth)acrylate of the present invention were capable of suppressing tilt when applied to an optical disk, preventing the occurrence of corrosion in the reflection layer, and forming an optical disk having excellent properties. On the other hand, the ultraviolet-curable compositions of Comparative Examples 1 to 3 using the unbranched epoxy acrylate of Synthesis Example 3 showed increased error rates due to the corrosion of the reflection layer, and the ultraviolet-curable composition of Comparative Example 4 using the epoxy acrylate of Synthesis Example 4 was not sufficient in the reduction of tilt. In addition, the Comparative Examples 5 to 7 respectively included the same amounts of the epoxy acrylate represented by the formula (5) as compared to Example 1 to 3. The ultraviolet-curable composition of Comparative Example 5 showed large tilt after the environment test, the ultraviolet-curable composition of Comparative Example 6 showed an increased error rate due to the corrosion of the reflection layer, and the ultraviolet-curable composition of Comparative Example 7 was not capable of yielding a thickness of 100 ± 5 µm due to low viscosity.

### BRIEF DESCRIPTION OF THE DRAWINGS

FIG. 1 shows an example of a single layer optical disk of the present invention.
FIG. 2 shows an example of a single layer optical disk of the present invention.
FIG. 3 shows an example of a dual layer optical disk of the present invention.
FIG. 4 shows a molecular weight distribution of an epoxy acrylate of Synthesis Example 1 measured by GPC.
FIG. 5 shows a molecular weight distribution of an epoxy acrylate of Synthesis Example 2 measured by GPC.
FIG. 6 shows a molecular weight distribution of an epoxy acrylate of Synthesis Example 3 measured by GPC.

### Brief Description of Reference Symbols

1. Substrate
2. Light reflection layer
3. Light transmission layer of an ultraviolet-curable composition
4. Hard coat layer
5. Light reflection layer
6. Light transmission layer of an ultraviolet-curable composition

## Claims

1. An ultraviolet-curable composition for an optical disk for use in a light transmission layer of an optical disk which has at least a light reflection layer and a light transmission layer laminated on a substrate, for reading data by allowing a laser beam to enter from the side of said light transmission layer, wherein
the composition includes a branched epoxy (meth)acrylate (E1) comprising:
at least one type of structural units represented by the formulas (1) and (2): 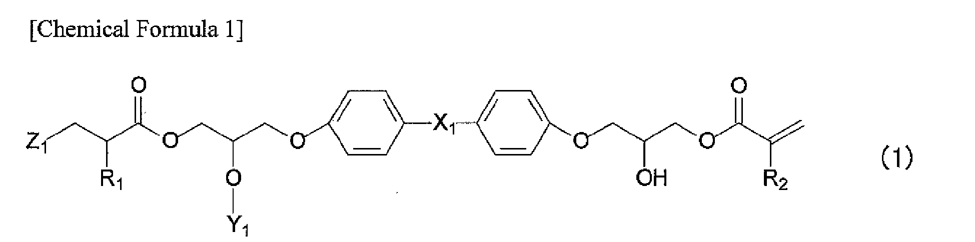 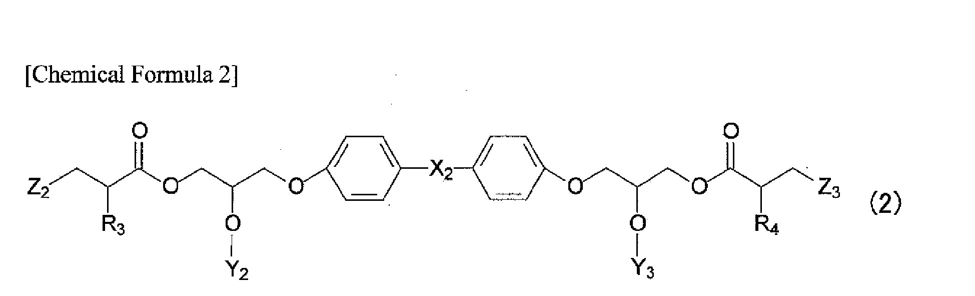 (in the formulas (1) and (2), X₁ and X₂ each represent, independently, a divalent group selected from SO₂, CH₂, CH(CH₃), or C(CH₃)₂, and R₁ to R₄ each represent, independently, a hydrogen atom or a methyl group), and
structural units represented by the formulas (3) and (4): 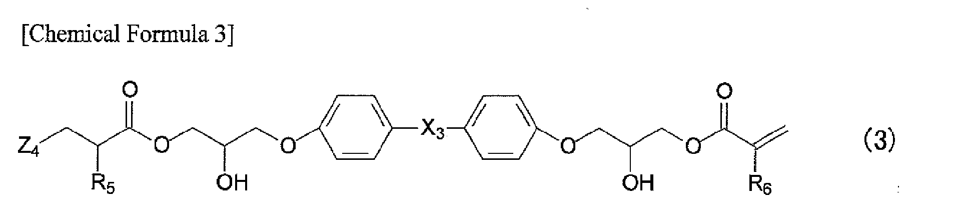 (in the formula (3), X₃ represents a divalent group selected from SO₂, CH₂, CH(CH₃), or C(CH₃ )₂, and R₅ and R₆ each represent, independently, a hydrogen atom or a methyl group) 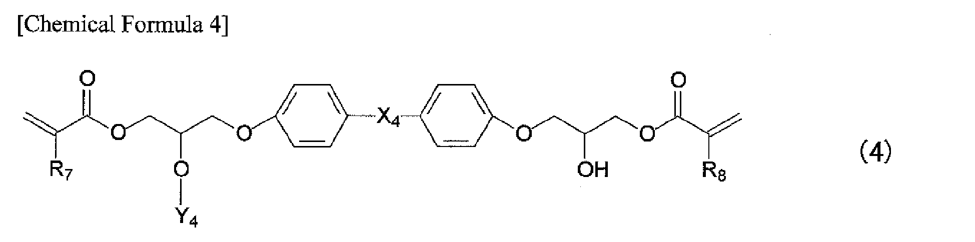 (in the formula (4), X₄ represents a divalent group selected from SO₂ , CH₂, CH(CH₃ ), or C(CH₃ )₂, and R₇ and R₈ each represent, independently, a hydrogen atom or a methyl group),
Y₁ in the structural unit represented by said formula (1) is bonded to any one of Z₁ to Z₃ of different structural units represented by the formulas (1) and (2), or Z₄ in the formula (3),
Y₂ and Y₃ in the structural unit represented by said formula (2) are respectively bonded to a hydrogen atom, any one of Z₁ to Z₃ of different structural units represented by the formulas (1) and (2), or Z₄ in the formula (3),
Z₁ to Z₃ in the structural units represented by said formulas (1) and (2) are respectively bonded to any one of Y₁ to Y₃ of different structural units represented by the formulas (1) and (2), or Y₄ in the formula (4), and
a weight average molecular weight of said branched epoxy (meth)acrylate (E1) measured by gel permeation chromatography is 1000 to 10000.

2. The ultraviolet-curable composition for an optical disk according to claim 1, wherein the composition includes said branched epoxy (meth)acrylate (E1), and an epoxy (meth)acrylate (E2) represented by the formula (5): 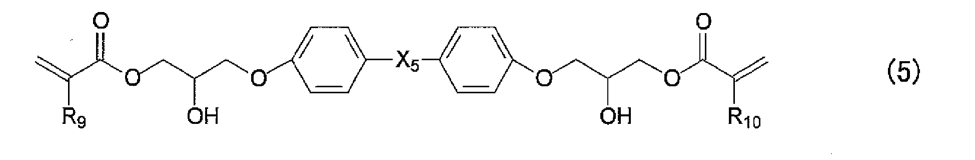 (in the formula (5), X₅ represents a divalent group selected from SO₂ , CH₂, CH(CH₃ ), or C(CH₃ )₂, and R₉ and R₁₀ each represent, independently, a hydrogen atom or a methyl group), and
a ratio of the branched epoxy (meth)acrylate (E1) to the epoxy (meth)acrylate (E2) is, branched epoxy (meth)acrylate (E1)/epoxy (meth)acrylate (E2) = 10/1 to 1/2 in terms of the area ratio of a chromatogram measured by gel permeation chromatography.

3. The ultraviolet-curable composition for an optical disk according to claim 1, wherein said branched epoxy (meth)acrylate (E1) comprises a branched epoxy (meth)acrylate represented by the formula (6): 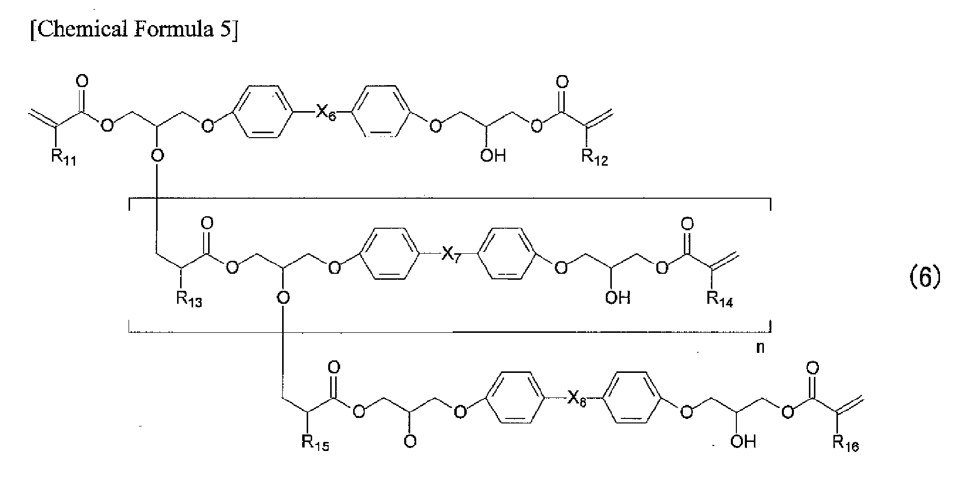 (in the formula (6), X₆ to X₈ each represent, independently, a divalent group selected from SO₂, CH₂, CH(CH₃ ), or C(CH₃ )₂, R₁₁ to R₁₆ each represent, independently, a hydrogen atom or a methyl group, and n represents an integer from 0 to 20).

4. An ultraviolet-curable composition for an optical disk for use in a light transmission layer of an optical disk which has at least a light reflection layer and a light transmission layer laminated on a substrate, for reading data by allowing a laser beam to enter from the side of said light transmission layer, wherein
the composition includes a branched epoxy (meth)acrylate which can be obtained by: reacting, in a mixture containing
(1-1) a diacrylate (A2) of an aromatic bifunctional epoxy resin,
(1-2) (1-2-1) a monoacrylate (A1) of an aromatic bifunctional epoxy resin and/or (1-2-2) an aromatic bifunctional epoxy resin (B) other than said (A1) and (A2),
between a hydroxyl group and an acryloyl group within the diacrylate (A2) of an aromatic bifunctional epoxy resin, or between a hydroxyl group and an acryloyl group within the diacrylate (A2) of an aromatic bifunctional epoxy resin and the monoacrylate (A1) of an aromatic bifunctional epoxy resin,
so as to thereby obtain a reaction mixture containing a branched epoxy acrylate intermediate having a hydroxyl group, an acryloyl group, and an epoxy group;
thereafter, mixing the reaction mixture and an unsaturated monocarboxylic acid to cause a reaction between the epoxy group within the branched epoxy (meth)acrylate intermediate and the carboxyl group within said unsaturated monocarboxylic acid.

5. The ultraviolet-curable composition for an optical disk according to claim 4, wherein the mixture containing said (1-1) diacrylate (A2) of an aromatic bifunctional epoxy resin, and (1-2) (1-2-1) the monoacrylate (A1) of an aromatic bifunctional epoxy resin and/or (1-2-2) the aromatic bifunctional epoxy resin (B) other than said (A1) and (A2), is obtained by reacting an aromatic bifunctional epoxy resin (b) with an acrylic acid (a) in the presence of a phosphorus-based catalyst (C) under conditions where the epoxy groups within the aromatic bifunctional epoxy resin (b) exist in an excess relative to the carboxyl groups within the acrylic acid (a).

6. The ultraviolet-curable composition for an optical disk according to claim 5, wherein an equivalent ratio of the epoxy groups within the aromatic bifunctional epoxy resin (b) to the carboxyl groups within the acrylic acid (a) (epoxy group equivalent weight)/(carboxyl group equivalent weight) in the reaction between the aromatic bifunctional epoxy resin (b) and the acrylic acid (a) is 1.1 to 5.5.

7. The ultraviolet-curable composition for an optical disk according to any one of claims 1 to 6, wherein a dynamic elastic modulus of a cured product obtained by irradiation of ultraviolet rays is 2000 MPa (at 30°C) or higher.

8. The ultraviolet-curable composition for an optical disk according to any one of claims 1 to 7, wherein a content of the branched epoxy (meth)acrylate (E1) is 10% to 80% by mass relative to the total amount of radical polymerizable compounds included in the ultraviolet-curable composition.

9. The ultraviolet-curable composition for an optical disk according to any one of claims 1 to 8, wherein a B-type viscosity of the composition at 25°C is 1000 to 2500 mPa.

10. The ultraviolet-curable composition for an optical disk according to any one of claims 1 to 9, wherein the composition includes at least one selected from hydroxypivalate neopentylglycol diacrylate, caplolactone-modified hydroxypivalate neopentylglycol diacrylate, tricyclodecane dimethanol diacrylate, ethylene oxide-modified bisphenol A diacrylate, phenoxyethyl acrylate, or tetrahydrofurfuryl acrylate.

11. An optical disk having a light reflection layer and a light transmission layer sequentially laminated on a substrate, for reading data by allowing a blue laser beam to enter from the side of said light transmission layer, wherein
said light transmission layer comprises a cured product of the ultraviolet-curable composition for an optical disk according to any one of claims 1 to 10.

12. The optical disk according to claim 11, wherein a hard coat layer is provided on said light transmission layer.

13. An optical disk having a first light reflection layer, a first light transmission layer, a second light reflection layer, and a second light transmission layer sequentially laminated on a substrate, for reading data by allowing a blue laser beam to enter from the side of said second light transmission layer, wherein
said first light transmission layer and said second light transmission layer comprise cured products of the ultraviolet-curable composition for an optical disk according to any one of claims 1 to 10.

14. The optical disk according to claim 12, wherein a hard coat layer is provided on said second light transmission layer.
